(19) Europäisches Patentamt
European Patent Office
Office européen des brevets

(11) EP 0 582 944 B1

(12) **EUROPÄISCHE PATENTSCHRIFT**

(45) Veröffentlichungstag und Bekanntmachung des Hinweises auf die Patenterteilung:
**14.05.1997 Patentblatt 1997/20**

(51) Int Cl.6: **G02B 6/44**

(21) Anmeldenummer: **93112444.0**

(22) Anmeldetag: **03.08.1993**

(54) **Verfahren und Einrichtung zur Herstellung einer optischen Bandleitung**

Method and device for the fabrication of an optical stripline

Méthode et dispositif pour la fabrication d'un guide d'ondes lumineuses à ruban

(84) Benannte Vertragsstaaten:
**AT BE CH DE FR GB IT LI NL SE**

(30) Priorität: **11.08.1992 DE 4226600**
**04.06.1993 DE 4318664**
**08.06.1993 DE 4319087**

(43) Veröffentlichungstag der Anmeldung:
**16.02.1994 Patentblatt 1994/07**

(73) Patentinhaber: **SIEMENS AKTIENGESELLSCHAFT**
**80333 München (DE)**

(72) Erfinder:
• **Oestreich, Ulrich**
**d-81375 München (DE)**
• **Dotzer, Peter**
**D-81336 München (DE)**
• **Unterberger, Siegfried**
**D-96450 Coburg (DE)**

(56) Entgegenhaltungen:
**EP-A- 0 330 277**     **US-A- 4 720 165**

**Beschreibung**

Die Erfindung betrifft ein Verfahren zur Herstellung einer optischen Bandleitung, bei dem mehrere vorbeschichtete Lichtwellenleiter nebeneinander durch eine sie umschließende, einen Auslaufkanal aufweisende Beschichtungseinrichtung hindurchgeführt werden, der ein zum Einschließen der Lichtwellenleiter dienendes Beschichtungsmaterial zugeführt wird.

Aus der US-PS 4 147 407 ist ein Verfahren zur Herstellung einer Bandleitung bekannt, bei dem vorbeschichtete (d.h. mit einem Coating versehene) Lichtwellenleiter durch eine rechteckförmige Düse hindurchgezogen werden, wobei der Düse zusätzlich ein Lösungsmittel zugeführt wird. Dieses Lösungsmittel bewirkt ein Anlösen des Coatings der Lichtwellenleiter, wobei die verschiedenen Coatings der Lichtwellenleiter miteinander verschmelzen. Da sich die Lichtwellenleiter somit unmittelbar berühren müssen, um die gewünschte Verschmelzung zu erreichen, kann die Öffnung nur so groß gewählt werden, daß die Lichtwellenleiter gerade hindurchpassen. Dies ist aber im Hinblick darauf nicht unproblematisch, daß die Durchmesser der Coatings gewissen Schwankungen unterliegen. Außerdem ist es bei diesem Verfahren stets erforderlich, daß die beschichteten Lichtwellenleiter mit der Außenwand der rechteckförmigen Beschichtungsdüse in Berührung kommen, was zu einem Abrieb und zu einer mechanischen Beanspruchung der Lichtwellenleiter führt.

Aus der DE-OS 37 33 124 ist ein Verfahren zum Aneinanderkleben von Lichtwellenleitern zur Bildung einer optischen Bandleitung bekannt, bei dem die Lichtwellenleiter durch eine rechteckförmige Beschichtungsdüse hindurchgeführt werden. Auch hier ist dafür gesorgt, daß die einzelnen Lichtwellenleiter aneinandergedrückt werden, wozu auf einer Seite der Beschichtungsdüse ein unter Federvorspannung stehender Gleitschieber vorgesehen ist. Dieser Gleitschieber ermöglicht zwar einen gewissen Toleranzausgleich bei Durchmesserschwankungen des Coatings; es bleibt aber das Problem bestehen, daß es durch den engen Kontakt zwischen der Düsen-Innenwand und der Beschichtung der Lichtwellenleiter zu Reibungskräften und zu einem unerwünschten und störenden Abrieb des Beschichtungsmaterials kommen kann.

Aus der EP-A2 438 668 ist ein Beschichtungsverfahren bekannt, bei dem die Lichtwellenleiter vor dem Einlauf in die Beschichtungseinrichtung über mindestens eine mit Nuten versehene Rolle geführt werden, um den Lichtwellenleitern eine bestimmte Lage und einen bestimmten Abstand zueinander aufzuprägen. Es ist dabei jedoch nicht ohne weiteres sichergestellt, daß die Lichtwellenleiter auch tatsächlich ihre ihnen durch die mit Nuten versehene Rolle aufgeprägte Lage im weiteren Verlauf der Beschichtungseinrichtung beibehalten. Deshalb ist zwischen dem Einlaufkanal und dem Auslaufkanal zusätzlich ein Führungsblock vorgesehen, der mehrere parallel verlaufende Nuten aufweist, wobei in jeder der Nuten jeweils ein Lichtwellenleiter liegt und so die Lichtwellenleiter untereinander in ihrem Abstand zusätzlich und erneut definiert werden.

Alle vorstehend genannten Verfahren gehen von der Vorstellung aus, daß die Lichtwellenleiter durch eine mechanische Führung, sei es durch die Wand einer Düse oder durch genutete Führungsrollen oder Führungsblöcke in ihrer Lage zueinander ausgerichtet werden müssen.

Dies hat zur Folge, daß die Lichtwellenleiter stets mit einem mechanisch festem Bauteil, nämlich der Beschichtungsdüse bzw. den genuteten Führungseinrichtungen in Verbindung stehen bzw. diese berühren, so daß es zu einer Beanspruchung der Lichtwellenleiter durch Reibung und zu einem Abrieb kommt und daß zudem Schwierigkeiten auftreten können, wenn die Vor-Beschichtung (Coating) der Lichtwellenleiter größere Toleranzwerte aufweist. Die bekannten Verfahren haben zudem wegen der mechanischen Beanspruchung des Lichtwellenleiter-Coatings den Nachteil, daß hohe Durchlaufgeschwindigkeiten kaum realisiert werden können, weil eine Vergrößerung der Durchlaufgeschwindigkeit die mechanische Beanspruchung überproportional ansteigen läßt, insbesondere im Hinblick auf den zu erwartenden Abrieb. Der bei allen Verfahren anzuwendende Überdruck im Beschichtungsmaterial wirkt zudem sogar dezentrierend, d.h. die Fasern liegen im fertigen Bändchen z.B. nicht in einer Ebene.

Der Erfindung liegt die Aufgabe zugrunde, ein Verfahren anzugeben, bei dem die Lichtwellenleiter ohne mechanisch an die Beschichtung angreifende feste Führungsbauteile möglichst genau zentrisch innerhalb des Beschichtungsmaterials angeordnet werden. Diese Aufgabe wird bei einem Verfahren der eingangs genannten Art dadurch gelöst, daß die Lichtwellenleiter in der Beschichtungseinrichtung ohne Berührung mit Wandungsteilen oder Führungseinrichtungen und somit frei laufend derart geführt werden, daß sie im wesentlichen nur mit dem zugeführten Beschichtungsmaterial in Berührung kommen, daß der Auslaufkanal in seinem kleinsten Querschnitt breiter gewählt ist als n (dl), wobei n die Zahl der Lichtwellenleiter und dl deren Außendurchmesser bedeutet, und daß durch die Längsbewegung der Lichtwellenleiter eine geschleppte Strömung des flüssigen Beschichtungsmaterials erzeugt wird, wobei die Viskosität des Beschichtungsmaterials und die Durchlaufgeschwindigkeit so eingestellt werden, daß die sich ergebende Schleppströmung die Lichtwellenleiter in der durch das Beschichtungsmaterial gebildeten Umhüllung nach Durchlauf des Auslaufkanals zentriert.

Bei der Erfindung wird somit im Gegensatz zu den bekannten Lösungswegen nicht durch ein Andrücken der Lichtwellenleiter an die Wandung oder an genutete Führungseinrichtungen oder dergleichen die Ausrichtung und Zentrierung bewirkt, sondern dadurch, daß das Beschichtungsmaterial mit den durch dieses Material hindurch gezogenen Lichtwellenleitern durch Erzeugung einer geschleppten Strömung in beiden Achsen Drücke erzeugt, deren Größe mit abnehmender Schichtdicke eher zunimmt. Es ist also bei der Erfindung nicht vorgesehen, daß die Lichtwellenleiter im Bereich der Beschichtungseinrichtung mit Wandungsteilen in Berührung kommen, sondern sie bleiben hier in die geschleppte Strömung des flüssigen Beschichtungsmaterials eingebettet, was einerseits einen besonders schonenden Transportvorgang bewirkt und andererseits den automatischen Justierungseffekt bewirkt. Durch die Erfindung ist somit sichergestellt, daß praktisch ohne mechanische Beanspruchung der Lichtwellenleiter deren Zentrierung und Justierung innerhalb der Bandleitung erreicht werden kann, d.h. die gleichmäßige und symmetrische Verteilung der Lichtwellenleiter innerhalb der durch das Beschaichtungsmaterial gegebenen Kontur. Die Achsen der Lichgtwellenleiter liegen also praktisch in einer Ebene und das Beschichtungsmaterial ist überall etwa gleich stark aufgetragen. Eine derartige genaue Positionierung der Lichtwellenleiter ist unter anderem deshalb von besonderer Bedeutung, weil z.B. bei Spleißvorgängen an optischen Bandleitungen alle Lichtwellenleiter in einem Arbeitsgang miteinander verbunden werden sollen, was nur dann einfach durchzuführen ist, wenn die Lichtwellenleiter bereits von vornherein innerhalb der Bandleitung möglichst ohne nennenswerte Abweichung und ohne schwankende Abstände in einer Ebene liegen.

Die Erfindung betrifft weiterhin eine Einrichtung zur Herstellung einer optischen Bandleitung, bei der mehrere Lichtwellenleiter nebeneinander in einer sie umschließenden Beschichtungseinrichtung in mindestens einem Auslaufkanal geführt sind, der ein zum Einschließen der Lichtwellenleiter dienendes Beschichtungsmaterial zugeführt ist. Diese Einrichtung ist dadurch gekennzeichnet, daß der Auslaufkanal in seinem kleinsten Querschnitt breiter gewählt ist als n(dl), wobei n die Zahl der Lichtwellenleiter und dl deren Außendurchmesser bedeutet, so daß die Lichtwellenleiter in der Beschichtungseinrichtung ohne Berührung mit Wandungsteilen oder Führungseinrichtungen und somit frei laufend derart geführt sind, daß sie im wesentlichen nur mit dem zugeführten Beschichtungsmaterial in Berührung kommen, und daß die Viskosität des Beschichtungsmaterials und die Durchlaufgeschwindigkeit so gewählt sind, daß durch die Längsbewegung der Lichtwellenleiter in dem Auslaufkanal eine geschleppte Strömung des flüssigen Beschichtungsmaterials entsteht, welche die Lichtwellenleiter in der durch das Beschichtungsmaterial gebildeten Umhüllung nach Durchlauf des Auslaufkanals zentriert.

Sonstige Weiterbildungen der Erfindung sind in Unteransprüchen wiedergegeben.

Die Erfindung und ihre Weiterbildungen werden nachfolgend anhand von Zeichnungen näher erläutert, in denen Ausführungsbeispiele der Erfindung dargestellt sind. Es zeigen:

| | |
|---|---|
| Figur 1 | eine Beschichtungseinrichtung nach der Erfindung im Querschnitt, |
| Figur 2 | eine geöffnete Beschichtungseinrichtung nach Figur 1 in Draufsicht, |
| Figuren 3 und 4 | Einzelheiten über die Ausgestaltung eines Einlauftrichters der Einrichtung nach Figur 1 und Figur 2. |
| Figuren 5 und 6 | Einzelheiten über die Gestaltung eines ersten auslaufseitigen Trichters innerhalb der Einrichtung nach Figur 1 und Figur 2. |
| Figuren 7 und 8 | Einzelheiten über die Gestaltung eines zweiten ausgangsseitigen Beschichtungstrichters der Einrichtung nach Figur 1 und Figur 2, |
| Figur 9 | in vergrößerter Darstellung einen Schnitt durch eine Bandleitung, |
| Figur 10 | eine Fertigungslinie mit einer Einrichtung zur Durchführung des erfindungsgemäßen Verfahrens in schematischer Darstellung und |
| Figur 11 | ein Diagramm zur Erläuterung des Entstehens einer Schleppströmung |
| Figur 12 | in perspektivischer Darstellung einen asymmetrisch gestalteten Auslaufkanal |
| Figur 13 und 14 | Einzelheiten einer im Gegenstromprinzip durchströmten Beschichtungskammer. |

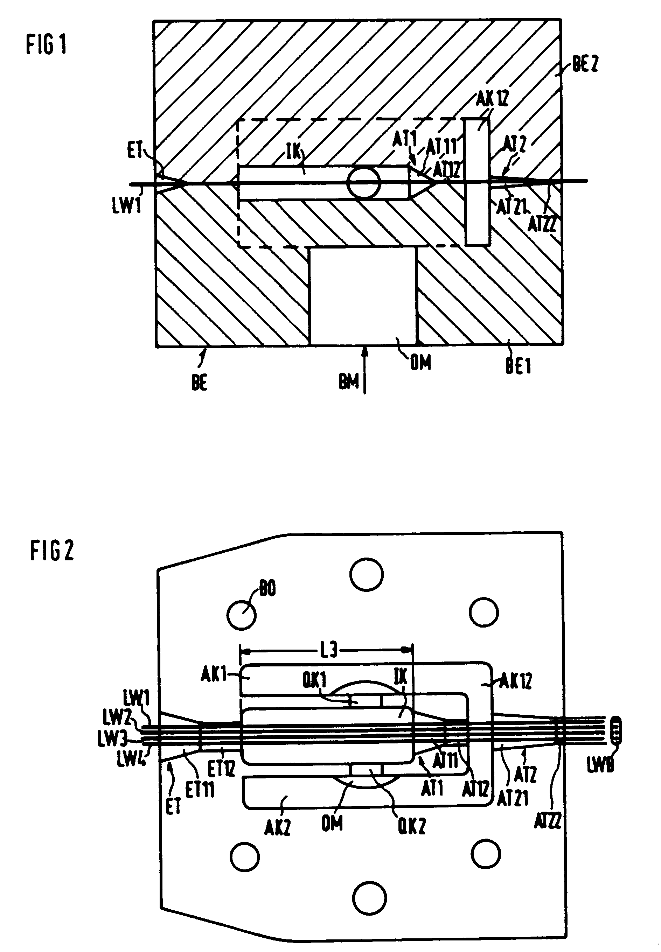

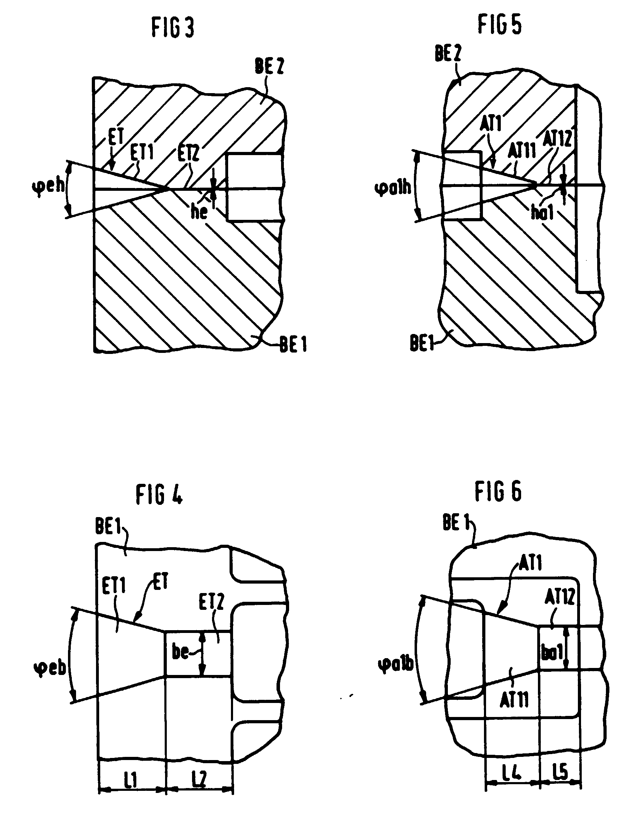

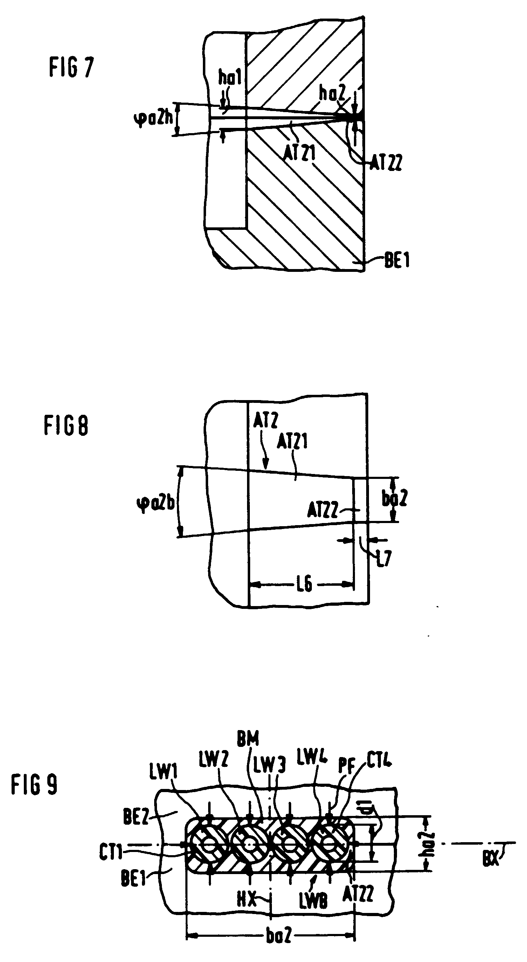

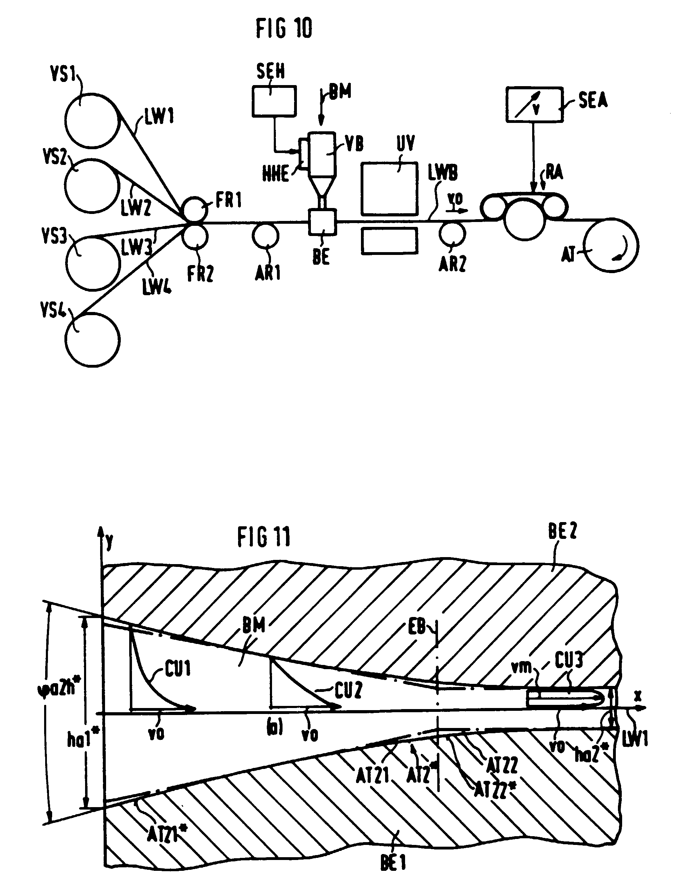

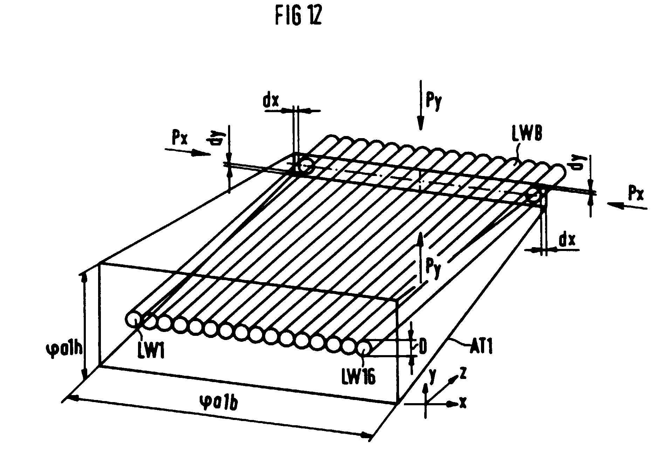

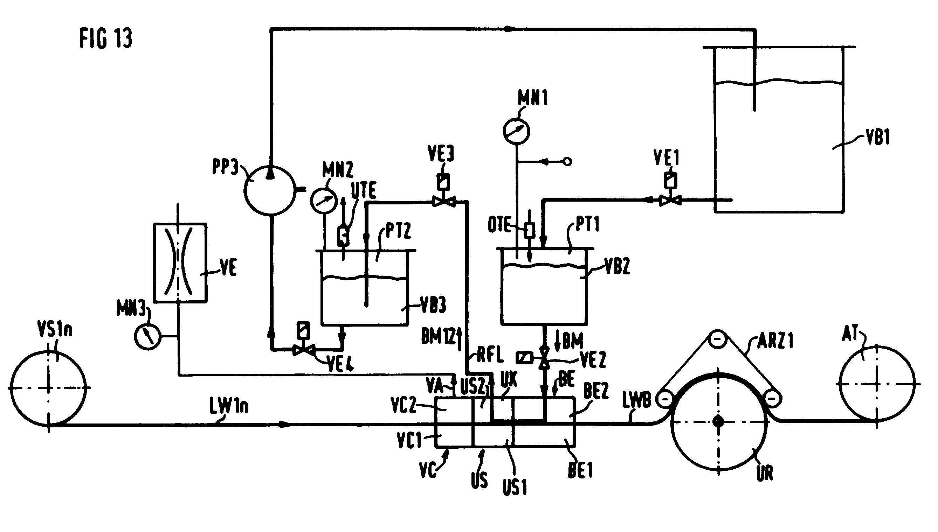

In Figur 1 ist eine Beschichtungseinrichtung BE geschnitten dargestellt, wobei die Schnittlinie mit der Achse der Durchlaufrichtung der Lichtwellenleiter übereinstimmt. Die Beschichtungseinrichtung BE besteht aus zwei gleichen Teilen BE1 und BE2, die über geeignete Verbindungsmittel, zum Beispiel Schrauben zusammengehalten werden, wofür entsprechende Durchgangsbohrungen BO (Figur 2) vorgesehen sind. Bei der Beschichtungseinrichtung BE nach Figur 1 werden die Lichtwellenleiter z.B. LW1 einem Einlaufkanal ET zugeführt, dessen genauere Auslegung anhand der Figuren 3 und 4 erläutert wird. Anschließend gelangen die Lichtwellenleiter in eine innere Kammer IK, der von außen über eine Öffnung OM, die in dem unteren Einrichtungsteil BE1 angebracht ist, flüssiges Beschichtungsmaterial BM zugeführt wird. An die innere Kammer IK schließt sich ein erster auslaufseitiger Trichter (Ausgangskanal) AT1 an, der aus zwei Teilbereichen AT11 und AT12 besteht, welche näher anhand der Figuren 5 und 6 erläutert werden. Nach Durchlaufen eines Verbindungsbereiches AK12 gelangen die Lichtwellenleiter zu einem zweiten Auslaufkanal AT2, der sich aus Teilbereichen AT21 und AT22 zusammensetzt, die näher anhand der Figuren 7 und 8 beschrieben werden.

Figur 2 zeigt die Draufsicht auf das Beschichtungselement BE1 bei abgenommenem Beschichtungselement BE2. Von links laufen mehrere, im vorliegenden Beispiel vier Lichtwellenleiter LW1 bis LW4 in den Einlaufkanal ET ein, wobei dieser Einlaufkanal ET über seine ganze Länge einen rechteckigen Querschnitt aufweist. Der erste Teil ET1 des Einlaufkanals ET ist keilförmig gestaltet und weist in der Höhe einen Öffnungswinkel zwischen den beiden Beschichtungselementen BE1 und BE2 auf, der in Figur 3 mit eh bezeichnet ist. In der Breite ist der Teilbereich ET1, wie aus der Draufsicht nach Figur 4 auf das Beschichtungselement BE1 entnehmbar ist, ebenfalls keilförmig ausgestaltet und weist in diesem Trichterbereich einen Winkel eb auf. Der nachfolgende Teilbereich ET2 des Einlauftrichters ET weist einen konstant bleibenden rechteckigen Querschnitt auf (= Rechteckrohr), dessen Höhe in Figur 3 mit he bezeichnet ist, während seine Breite in Figur 4 das zugszeichen be trägt.

Der Einlauftrichter ET1 ist auch in seinem Teilbereich ET2 so dimensioniert, daß die Lichtwellenleiter LW1 bis LW4, welche nebeneinander liegend durch die rechteckförmige Öffnung hindurchgezogen werden, seitlich ausreichendes Spiel aufweisen. Bezeichnet man den Außendurchmesser eines (mit cem Coating beschichteten) Lichtwellenleiters, zum Beispiel LW1 mit d1, so ist bei n Lichtwellenleitern die Beziehung zwischen be und d1 wie folgt zu wählen:

$$be = n(d1) + \Delta b \qquad (1)$$

Die Breite be sollte um einen Zuschlag von $\Delta b$ von 0,5 bis 0,2 mm größer sein als der Wert n(d1). Dieser Zuschlag ist nicht von der Faserzahl abhängig, da er den höchsten Schleppströmungsdruck bestimmt, und etwa der Dicke der gewünschten Deckschicht (oben und unten) auf den Lichtwellenleitern LW1 - LW4 entspricht.

Die Höhe he im Bereich des gleichbleibenden rechteckförmigen Querschnittes des Teilbereichs ET2 ist ebenfalls so zu wählen, daß die Lichtwellenleiter beidseitig mit Abstand zur Wandung geführt werden. Es gilt somit für die Höhe he

$$he = d1 + \Delta h \qquad (2)$$

Der Spalt zwischen Fasern und Werkzeugaustritt soll zweckmäßig rings um das Bändchen etwa gleich sein (vgl. Fig. 9), so daß etwa gilt

$$\Delta h \approx \Delta b.$$

Für die Winkel des Einlauftrichters ET1 werden zweckmäßig gewählt

eh zwischen 10° und 20°
eb zwischen 10° und 30°.

Der Einlauftrichter ET erfüllt somit die Aufgabe, ein geordnetes Einlaufen der Lichtwellenleiter LW1 bis LW4 in einer Reihe nebeneinander sicherzustellen und den Führungsdruck aufzubauen, wobei durch die entsprechend größere Dimensionierung des Querschnitts auch des rohrförmigen Teilbereichs ET2 ein leichtes, reibungsarmes Gleiten der geordneten Lichtwellenleiter LW1 bis LW4 innerhalb des Teilbereichs ET2 gewährleistet ist.

Der in zwei zueinander senkrechten Ebenen keilförmig ausgebildete Teilbereich ET1 weist (vgl. Fig. 4) eine Länge L1 auf, während der eine kasten- oder quaderförmige Öffnung bildende rohrförmige (Rechteckrohr) Teilbereich ET2 eine Länge L2 hat. Die Länge L1 wird zweckmäßig etwa um 5 mm gewählt, während die Länge L2 etwa zwischen 0,5 mm bis 6 mm liegt. Die Längen L1 und L2 sollten auf jeden Fall ein Mehrfaches der Bändchenbreite betragen. Diese Werte sind unabhängig von der Zahl n der einzuführenden Lichtwellenleiter, was im übrigen auch für die Höhe he des rohrförmigen Teilbereiches ET2 gilt. Dagegen ist die Breite be des rohrförmigen Teilbereiches ET2 bei größerer Zahl von Lichtwellenleitern entsprechend zu vergrößern, wie sich aus Gleichung (1) ergibt.

Wie insbesondere aus Figur 2 ersichtlich ist, schließt sich an den rohrförmigen Teilbereich ET2 eine innere Kammer IK an, deren Querschnitt bevorzugt etwa rechteckförmig gestaltet ist. Die Länge L3 der Kaammer IK beträgt in Durchlaufrichtung gesehen das 1- bis 3-fache der Bändchenseite (ba2 in Fig. 9). Diese Kammer IK dient der Zuführung des Beschichtungsmaterials BM, welches zunächst über die Öffnung OM zu zwei parallel zur Innenkammer IK verlaufenden Außenkammern AK1 und AK2 gelangt. Diese Außenkammern AK1 und AK2 sind über Querkanäle QK1 und QK2 mit der Innenkammer IK verbunden, so daß das Beschichtungsmaterial BM von den Außenkammern AK1 und AK2 der Innenkammer IK zugeführt wird und dort die Lichtwellenleiter LW1 bis LW4 allseitig umgibt. Das weitgehend flüssige Beschichtungsmaterial BM gelangt auch bis zu dem rohrförmigen Eingangsteil ET2 und in dieses hinein. Ein etwaiger (sehr kleiner Vordruck in der Kammer IK soll lediglich das Einschleppen Luft vermeiden. Die gesamte Führung und Zentrierung der Lichtwellenleiter rührt vom Schleppströmungsdruck her. Ein größerer Vordruck würde die Lichtwellenleiter allein dezentrieren, d.h. sie einseitig an die Wände pressen. An dieser Stelle bei ET2 ist die Führung der Lichtwellenleiter noch weitgehend unkritisch.

Am auslaufseitigen Ende der Innenkammer IK ist ein (erster) Auslaufkanal AT1 vorgesehen, der aus zwei Teilbereichen AT11 und AT12 zusammengesetzt ist. Auch hier ist der Querschnitt über die gesamte Länge des Auslaufkanals AT1 rechteckförmig gewählt. Nur der erste Teilbereich AT11 ist in zwei zueinander senkrechten Ebenen keilförmig gestaltet, während der nachfolgende Teilbereich AT12 einen gleichbleibenden, also rohrförmigen Querschnitt zeigt, welcher den kleinsten Querschnitt des Auslaßkanals AT1 bildet. Der keilförmige Teilbereich AT11 weist einen Öffnungswinkel in der Höhe (vergleiche Figur 5) von a1h auf, während der Winkel in der Breite (vergleiche Figur 6) mit a1b bezeichnet ist. Dabei sind folgende Winkelbereiche besonders zweckmäßig:

$\varphi$a1h zwischen 5° und 20° Grad
$\varphi$a1b zwischen 5° und 20° Grad.

Beide Winkelwerte sind unabhängig von der Zahl der zu einer Bandleitung zusammenzufassenden Lichtwellenleiter. Der im Querschnitt rechteckförmige erste Teil AT1 der Auslauföffnung AT1 geht an seinem Ende in den rohrförmigen, das heißt im Querschnitt sich nicht mehr ändernden Teilbereich AT2 über. Dessen Höhe (vgl. Fig. 5) ha1 ist größer gewählt als der Außendurchmesser dl der Lichtwellenleiter, so daß die Beziehung gilt

$$ha1 = d1 + \Delta h1 \qquad (3)$$

Es ist zweckmäßig, den Zuschlag $\Delta$h1 zwischen 0,05 und 0,2 mm zu wählen.
Die Breite ba1 des rohrförmigen Teilbereichs AT12 wird zweckmäßig so gewählt, daß die Beziehung gilt:

$$ba1 = n(d1) + \Delta ba1 \qquad (4)$$

wobei $\Delta$ba1 wertmäßig etwa im gleichen Bereich liegt wie $\Delta$h1.
Die Lichtwellenleiter LW1 - LW4 sollen in dem Teilbereich AT12 dessen Wandung nicht berühren. Erreicht wird dies durch die Erzeugung einer Schleppströmung im Bereich AT11 des Beschichtungsmaterials BM, die näher anhand von Fig. 11 erläutert wird.

Die ausgangsseitige Öffnung des Teilbereiches AT12 mündet in einen Querkanal AK12, welcher die Außenkanäle AK1 und AK2 miteinander verbindet. Es erfolgt somit an dieser Stelle eine erneute Zuführung von Beschichtungsmaterial BM und danach schließt sich ein zweiter Auslaufkanal AT2 an, der die eigentliche und endgültige Positionierung der Lichtwellenleiter vor der Aushärtung des aufgetragenen Beschaichtungsmaterials BM (z.B. eines Harzes) bewirkt. Dadurch wird eine Lichtwellenleiter-Bandleitung LWB enthalten, wie sie in Figur 2 rechts neben den Lichtwellenleitern LW1 bis LW4 und in Figur 9 in vergrößerter Darstellung im Querschnitt dargestellt ist. Insbesondere im Hinblick auf Spleißvorgänge ist es notwendig, daß jeder Lichtwellenleiter innerhalb der durch das Beschichtungsmaterial BM gebildeten Umhüllung stets möglichst exakt seine definierte, bezüglich der Außenkontur der Bandleitung LWB symmetrische Position beibehält.

Die Länge des keilförmigen Teilbereiches AT11 ist mit L4 bezeichnet, wobei L4 zweckmäßig zwischen der 1- bis 5-fachen Bändchenbreite (vgl. Fig. 9 - ba2) gewählt wird.
Die Länge L5 des rohrförmigen Teilbereiches AT12 liegt zweckmäßig zwischen 0,2 und 10 mm.
Die endgültige Zentrierung und damit gleichmäßige Verteilung der Lichtwellenleiter innerhalb der sie umschließenden Umhüllung aus Beschichtungsmaterial BM erfolgt in einem (zweiten) Auslaufteil AT2, der ebenfalls zwei Teilbereiche AT21 und AT22 aufweist. Der keilförmige erste Teilbereich AT21 mit rechteckigem Querschnitt über seine ganze Länge weist in der Höhe einen aus Figur 7 ersichtlichen Winkel $\varphi$a2h auf, wobei $\varphi$a2h zweckmäßig zwischen 5° und 20°, vorzugsweise um 8° gewählt wird. Die Winkel dieser keilförmigen Öffnung in der Breite, der aus Figur 8 ersichtlich ist und in dem die Lichtwellenleiter nebeneinander liegen, ist mit $\varphi$a2b bezeichnet, wobei für $\varphi$a2b ebenfalls Werte zwischen 5° und 20° vorzugsweise um 8° zweckmäßig sind. Die Breite ba2 des rohrförmigen, das heißt mit gleichbleibendem Querschnitt ausgestatteten Teilbereiches AT22 wird so gewählt, daß die Gleichung gilt:

$$ba2 = n(d1) + \Delta ba2$$

Es ist zweckmäßig, den Zuschlag $\Delta$ba2 um Werte zwischen 0,05 und 0,2 mm zu wählen.
Die Höhe ha2 (vergleiche Figur 7) der rechteckförmigen Öffnung im zweiten (rohrförmigen) Teilbereich AT22 wird zweckmäßig so gewählt, daß die Beziehung gilt:

$$ha2 = d1 + \Delta ha2$$

wobei ha2 zweckmäßig ebenfalls zwischen 0,05 und 0,2 mm zu wählen ist. Die Werte $\Delta$ha2 und $\Delta$ba2 legen die Dicke der Zusatzbeschichtung auf den Lichtwellenleitern fest und damit die Außenabmessungen des Lichtwellenleiterbändchens LWB. Die Dicke der Zusatzbeschichtung wird in beiden Achsen zweckmäßig etwas größer gewählt als dem gewünschten Endzustand entspricht, weil die Volumenschrumpfung z.B. beim Vernetzen etwa 15 bis 20% betragen kann.

Im gesamten Durchlaufbereich der Beschichtungseinrichtung BE ist also eine Führung der Lichtwellenleiter LW1 bis LW4 gewährleistet, die keinen reibenden Kontakt mit den Außenflächen selbst bei dem engen rechteckförmigen Durchführungen ET12, AT12 und AT22 vorsieht. Die Positionierung der Lichtwellenleiter wird dabei fortlaufend verbessert und schließlich wird die Austrittspositionierung bei AT22 besonders exakt ausgeführt. In all diesen engen rohrförmigen Bereichen ist für die Lichtwellenleiter LW1 - LW4 stets ein durch die Selbstzentrierung erzeugter Wandabstand gegeben, der optimale Ergebnisse liefert.

Die Erfindung sieht vor, daß die Lichtwellenleiter LW1 bis LW4 durch die Beschichtungseinrichtung BE nicht nur wie bereits beschrieben, frei laufend geführt werden, sondern zusätzlich so, daß sie nur mit dem Beschichtungsmaterial BM in Berührung kommen. Weiterhin ist bei der Erfindung eine optimale Zentrierung, das heißt eine genaue Einhaltung gleichmäßiger Lagepositionen innerhalb des Lichtwellenleiter-Bändchens LWB dadurch gewährleistet, daß die Längsbewegung der Lichtwellenleiter so vorgenommen wird, daß eine geschleppte Strömung des flüssigen Beschichtungsmaterials BM erzeugt wird. Die Lichtwellenleiter werden so durch das flüssige Beschichtungsmaterial so hindurchgezogen, daß dieses in der Durchlaufrichtung, also in Figur 1 und 2 von links nach rechts, durch die Lichtwellenleiter mitgerissen wird. Durch diese geschleppte Strömung des flüssigen Beschichtungsmaterials wird die selbstzentrierende Wirkung für die Lichtwellenleiter erhalten und zwar ohne daß von außen durch mechanisch an den Lichtwellenleitern angreifende Führungselemente - die stets einen Abrieb und eine Bremsung der Lichtwellenleiter bewirken-diese Lichtwellenleiter in eine bestimmte Position gedrückt werden müssen.

In Figur 9 ist zur Verdeutlichung eine Frontansicht der Ausgangsöffnung AT22 vergrößert dargestellt, in der die vier Lichtwellenleiter LW1 bis LW4 eingezeichnet sind. Die Lichtwellenleiter LW1 bis LW4 berühren sich seitlich, d.h. sie stoßen seitlich mit ihrer Schutzhaut(Coating)CT1-CT4 aneinander an, während außen ein gleichbleibend breiter Spalt verbleibt, der durch Beschichtungsmaterial BM gefüllt ist. Auch oberhalb und unterhalb der Höhe ha2 des Spaltes AT22 ist Beschichtungsmaterial zwischen den Lichtwellenleitern LW1 bis LW4 und der Wandung der Austrittsöffnung AT22 vorgesehen. Bei richtiger Dimensionierung ist der Schleppströmungsdruck überall gleich groß (angedeutet durch die Pfeile PF), wobei die richtige Position der Lichtwellenleiter, d.h. deren Justierung zwangsläufig herbeigeführt wird. Zwischen den einzelnen Lichtwellenleitern gibt es keine Schleppströmung. In den Zwickeln ist der Druck am geringsten, wobei natürlich ein gewisser Ausgleich da ist, der aber nicht zum Beseitigen der gegenseitigen Berührung führt. Die Lichtwellenleiter LW1 bis LW4 liegen somit symmetrisch sowohl bezüglich der Breiten-Achse BX als auch bezüglich der Höhen-Achse AX der Austrittsöffnung AT22 bzw. der Außenkontur der Bandleitung LWB. Diese Symmetrie in Höhe und Breite muß nicht heißen, daß die Seitenbeschichtungen rechts und links einerseits und die Beschichtungen oben und unten andererseits gleich dick sein müssen. Die Symmetrie bleibt z.B. auch dann erhalten, wenn das jeweilige Beschichtungsmaterial z.B. rechts und links etwas dicker ist als die Boden- und Deckschicht oder umgekehrt.

In Figur 10 ist der Aufbau einer Fertigungslinie gezeigt, die nach dem erfindungsgemäßen Verfahren arbeitet. Die Lichtwellenleiter LW1 bis LW4 werden von Vorratsspulen VS1 bis VS4 abgezogen und über Führungsrollen FR1 und FR2 in einer Ebene nebeneinander zusammengefaßt. Anschließend ist eine durch die Lichtwellenleiter LW1 bis LW4 umschlungene Abzugsrolle AR1 vorgesehen, die eine definierte Lage für die auf der Ausgangsseite vorzusehende Zugspannung bereitstellt. Anschließend folgt die in den Figuren 1 bis 8 näher beschriebene Beschichtungseinrichtung BE, wobei das Beschichtungsmaterial BM in einem entsprechenden Vorratsbehälter VB in flüssiger Form vorhanden ist. Der Beschichtungseinrichtung BE ist eine UV-Lampe nachgeschaltet, die bei Verwendung härtbarer Harze als Beschichtungsmaterial eine schnelle Aushärtung der Beschichtung sicherstellt. Das so erhaltene Lichtleiter-Bändchen LWB umschlingt eine weitere Abzugsrolle AR2 und wird über einen Raupenabzug RA einer Aufwickeltrommel AT o. dgl. zugeführt. Die Abzugsrolle AR1 ist gebremst, so daß die Lichtwellenleiter LW1 bis LW4 in gespannter Form durch die Beschichtungseinrichtung BE hindurchlaufen. Die Zugspannung je Lichtwellenleiter am Ablauf sollte nicht größer als 1 N gewählt werden, aber mindestens 0,3 N betragen. Diese Zugkraft wird durch den Raupenabzug RA bereitgestellt, wobei gilt:

$$\text{Zugkraft (bei RA)} = \text{Ablauf-Bremskraft (bei AR1)} + \text{Beschichtungskraft (bei BE)}$$

Der statische Vordruck in der Beschichtungseinrichtung BE sollte so niedrig wei möglich werden. Es hat sich nämlich gezeigt, daß ein höherer Druck eher zu einer Dezentrierung bzw. De-Symmetrierung der Lichtwellenleiter innerhalb des Bändchens LWB beiträgt. Die Ursache liegt darin, daß eine durch einen größeren äußeren Druck erzeugte Strömung dezentrierend wirkt, das heißt durch den vergrößerten Druck werden die Lichtwellenleiter eher in Richtung auf eine Seitenwand gedrängt, wobei an der gegenüberliegenden Seitenwand ein entsprechend größerer Spalt auftritt. Der Druck sollte also nur so groß gewählt werden, daß genügend flüssiges Beschichtungsmaterial BM in den einzelnen Kammern der Beschichtungseinrichtung BE vorhanden ist und daß auch keine Luftanteile von der Einlaufseite einer Eintrittsöffnung ET hereingeschleppt werden. Zweckmäßige Druckwerte liegen zwischen $10^4$ und $10^5$ Pa.

Bezüglich der Viskosität des Beschichtungsmaterials BM ist davon auszugehen, daß ein niederviskoseres Material zur Erzeugung einer Schleppströmung eine höhere Durchlaufgeschwindigkeit vo erfordert als ein eher höherviskoses Material. Grob gesagt können etwa folgende Zuordnungen getroffen werden:

$$\text{Viskosität } \eta \approx \frac{1}{vo} \tag{5}$$

wobei vo die Geschwindigkeit der Lichtleitfaser beim Durchlaufen der Beschichtungseinrichtung BE bedeutet.
Weiterhin gilt

$$\eta = \text{Viskosität} \left[ \frac{N \cdot s}{m^2} \right]$$

$$\gamma = \text{Schergeschwindigkeit} = \frac{dv}{dr} \left[ \frac{m}{s} \cdot \frac{1}{m} = \frac{1}{s} \right]$$

$$\tau = \text{Scherspannung} \left[ \frac{N}{m^2} \right]$$

wobei die Fläche ($m^2$) in der gleichen Richtung liegt wie die Kraft. Dabei

$$\tau = \eta \cdot \gamma = \eta \cdot \frac{dv}{dr} \tag{6}$$

$$\eta = \frac{\tau}{\eta} \tag{7}$$

Bei einer vorgegebenen Viskosität des Beschichtungsmaterials BM kann die Schleppströmung zum Erhalten einer ausreichenden Zentrierung der Lichtwellenleiter innerhalb des Bändchens in einfacher Weise so eingestellt werden, daß die Abzugsgeschwindigkeit vo des Raupenabzugs RA nach Figur 10 durch eine entsprechende Steuereinrichtung SEA solange verändert wird, bis die gewünschte Zentrizität der Lichtwellenleiter innerhalb der durch das Beschichtungsmaterial BM gebildeten Umhüllung gewährleistet ist. Je größer die Geschwindigkeit vo um so höher werden die Staudrücke und um so besser der Zentriereffekt.

Soll mit einer vorgegebenen Durchlaufgeshwindigkeit vo gearbeitet werden, dann besteht auch die Möglichkeit, die Viskosität des Beschichtungsmaterials BM entsprechend einzustellen. Hierzu kann beispielsweise bei dem Vorratsbehälter VB eine Heizeinrichtung HHE vorgesehen sein, die von einer Steuereinrichtung SEH beaufschlagt wird. Durch eine Verringerung der Viskosität können Scherspannung und Staudruck verkleinert werden, durch eine Erhöhung können sie entsprechend zunehmen.

Zur Erläuterung der Zusammenhänge im Hinlick auf die Schleppströmung wird nachfolgend auf Figur 11 Bezug genommen, wo der erste (LW1) der vier Lichtwellenleiter bei einer Durchlaufrichtung von links nach rechts dargestellt ist. Die übrigen Lichtwellenleiter LW2 bis LW4 sind in der Tiefe, das heißt senkrecht unterhalb der Zeichenebene angeordnet zu denken. Während die Begrenzungswände beim Austrittskanal AT2 in Figur 7 und 8 geradlinig verlaufen, sind im vorliegenden Beispiel zur Erläuterung der theoretischen Zusammenhänge diese Begrenzungswände als durchgehende, stetig gekrümmte Linien gezeichnet. Dabei setzt sich der Austrittskanal AT2* aus einem linken größeren Teilbereich AT21* zusammen, der dem (keilförmigen) Bereich AT21* nach Figur 7 und 8 entspricht. Anschließend geht die etwa exponentiell verlaufende Kurve der Wandungsbegrenzung in einen zunehmend flacher werdenden rechten Teil über, der mit AT22* bezeichnet ist und der dem rohrförmigen Teilbereich AT22 nach Figur 7 und 8 vergleichbar ist. Das Beschichtungsmaterial BM ist (nach Beendigung des Anfahrvorganges) in der Nähe des durchlaufenden Lichtwellenleiters LW1 jeweils etwa genauso schnell wie dieser, weist also die Geschwindigkeit vo auf. Dagegen ist im Bereich der Innenwand des Austrittskanals AT2* die Geschwindigkeit des Beschichtungsmaterials Null, wobei sich im Eintrittsbereich, also bei der linken Öffnung von AT2* für die Geschwindigkeit ein etwa parabelförmig abfallender, mit CU1 bezeichneter Kurvenverlauf ergibt, wobei die Parabelachse in y-Richtung liegt. Im weiteren Verlauf, das heißt mit zunehmender Verengung des Kanals AT2* wird der Verlauf der Kurve CU1 steiler und nähert sich etwa einer Geraden an, die mit CU2 bezeichnet ist (Position (a)). Nach wie vor bleibt die Geschwindigkeit außen also im Bereich der Innenwand der Teile BE1 und BE2 der Beschichtungseinrichtung Null. Mit zunehmender Verengung tritt eine Verteilung der Geschwindigkeit auf, die durch die Kurve CU3 wiedergegeben wird, die etwa einer Parabel mit einer Achse parallel zur x-Richtung entspricht. Nach wie vor bleibt im Bereich unmittelbar am Lichtwellenleiter LW1 die Geschwindigkeit vo. Darüber liegt aber ein Geschwindigkeitsbereich, dessen Geschwindigkeit größer ist als vo und im Bereich der Innenwand der Durchtrittsöffnung AT2* ist die Geschwindigkeit wieder Null. Irgendwo in Fortschrittsrichtung tritt eine Geschwindigkeit vm auf, die größer ist als vo und diese Geschwindigkeit vm repräsentiert das Entstehen einer Schleppströmung, welche die Zentrierung der Lichtwellenleiter innerhalb des Spaltes AT2* bewirkt. Das Entstehen der justierungswirksamen Schleppströmung ist also gekennzeichnet durch Geschwindigkeitsbereiche innerhalb des Beschichtungsmaterials BM, die einen größeren Wert aufweisen als die Durchlaufgeschwindigkeit vo der Lichtwellenleiter LW1 bis LW4. Deren Entstehen wird verursacht durch das Mitreißen des Beschichtungsmaterials BM durch die zunehmende Verengung des Austrittskanals AT2* infolge der Bewegung der Lichtwellenleiter nach rechts mit der Geschwindigkeit vo.

Die nachfolgenden theoretischen Überlegungen und Ableitungen dienen der Verdeutlichung dieses Sachverhalts. Dabei wird von folgenden Voraussetzungen ausgegangen:

Das Strömungsvolumen ist an jeder Stelle der Austrittsöffnung AT2* gleich groß. Weiterhin gilt, daß an einer beliebigen Stelle auf der x-Achse die ursprüngliche Schleppströmung ungestört von der überlagerten Druckströmung ist, die aus umgewandelter Schleppströmung herrührt und die Viskosität weder druck- noch scherspannungsabhängig ist.

In Strömungsrichtung wird mit abnehmender Breite des Spaltes des Austrittkanals AT2* zunehmend Schleppströmungsvolumen in Druckströmungsvolumen umgewandelt. Da die Kontinuität (Kohärenzkriterium: Abweichungen nur durch "Ablösen" vor der Stelle (a) oder (schwache) Kompression hinter der Stelle (a)) gewahrt bleiben muß, bildet sich vor (a) eine Zone von mit zunehmendem Abstand von (a) entgegengesetzt der Strömungsrichtung zunehmenden Unterdruck, der nur durch einen Überdruck kompensiert werden kann. Nur insoweit ist das Anlegen eines Außendruckes, das heißt bereits im Bereich der Eintrittsöffnung OM des Beschichtungsmaterials BM nach Figur 1 zweckmäßig. Es gelten folgende Festlegungen:

$L =$ Längenelement der (noch nicht verbundenen) Lichtwellenleiteranordnung     $[m]$

$$dP = \text{Differential des örtlichen Druckes} \quad \left[\frac{N}{m^2}\right]$$

$$\eta = \text{Viskosität} \quad \left[\frac{N \cdot S}{m^2}\right]$$

$$\gamma = \text{Schergeschwindigkeit} \quad \left[\frac{m}{s} \cdot \frac{1}{m} \ = \ \frac{1}{s}\right]$$

$$\tau = \text{Scherspannung} \quad \left[\frac{N}{m^2}\right]$$

wobei die Fläche ($m^2$) in der gleichen Richtung liegt wie die Kraft.

Für reine Druckströmung gilt (für $L \gg y_o$)

$$\tau = dP \cdot L \cdot 2 \left( \frac{y_{ox}}{2} - yx \right) \cdot \left( \frac{1}{2 \cdot L \cdot dx} \right), \quad \text{also} \qquad (8)$$

$$\text{(wirksame Kraft)} \qquad \text{(Scherfläche)}$$

$$\tau = \frac{dP}{dx} \cdot \left( \frac{y_{ox}}{2} - yx \right) \qquad (9)$$

$\frac{dP}{dx}$ muß über den Spalt an jeder Stelle mit derselben x-Koordinate gleich sein. Andererseits ist

$$\tau = \eta \cdot \gamma = \eta \cdot \frac{dv}{dy} \qquad (10)$$

so daß (9) und (10)

$$\eta \cdot \int_{v=0}^{v=v_{max}} dv = \frac{dP}{dx} \int_{y=0}^{y=\frac{y_o}{2}} \left( \frac{y_{ox}}{2} - y_x \right) dy \qquad (10a)$$

ergeben.

$$\eta \cdot v_{max} = \frac{dP}{dx} \left( \frac{y_{ox}^2}{4} - \frac{y_{ox}^2}{8} \right) = \frac{dP}{dx} \cdot \frac{y_{ox}^2}{8} \qquad (11)$$

Bis zu einem beliebigen y ist

$$\eta \cdot v = \frac{dP}{dx} \left( y_x \cdot \frac{y_{ox}}{2} - \frac{y_x^2}{2} \right) \cdot \qquad (11a)$$

Das Volumen dieser - wie auch immer erzeugten "inneren" Druckströmung (Schleppströmung) ist

$$Q_P = \int_{y=0}^{y_o} v \cdot dy \cdot L = \frac{dP}{dx} \cdot \frac{L}{\eta} \int_{y=0}^{y_o} \left( y_x \cdot \frac{y_{ox}}{2} - \frac{y_x^2}{2} \right) dy \qquad (12)$$

$$Q_P = \frac{dP}{dx} \cdot \frac{1}{\eta} \cdot \frac{y_{ox}^3}{12} \cdot L \left[ \frac{N}{m^2} \cdot \frac{m^2}{Ns} \cdot m^3 = \frac{m^3}{s} \right] (13)$$

Diese Druckströmung entsteht aus der Differenz zwischen der Schleppströmung an der Stelle (a) und der Schleppströmung an beliebiger Stelle.

$$Q_p = Q_{sa} - Q_{sx} = \frac{vo}{2}(y_{oa} - y_{ox}) \cdot L =$$

$$= \frac{dP}{dx} \cdot \frac{1}{\eta} \cdot \frac{y_{ox}^3}{12} \cdot L \tag{14}$$

Die Gleichung (14) kann integriert werden, wenn $y_o(x)$ bekannt ist.

$$\int_{p=o}^{P} dP = 6 \; vo \cdot \eta \cdot \int_{x=a}^{x} \frac{y_e - y(x)}{y(x)^3} \cdot dx \tag{15}$$

Dieser Druck wird umso größer, je kleiner y(x) ist, wobei eine lineare Verringerung der Spaltdicke einen sehr steilen Druckanstieg zur Folge hat.

Die absolute Größe dieses Druckes reagiert empfindlich auf die sich verkleinernde oder vergrößernde Spaltdicke und erzwingt die Mittenlage (Symmetrie) der Faser.

Da die ideale Begrenzungskurve, wie sie in Fig. 11 gezeichnet ist, nur mit großem Aufwand herstellbar ist, wird sie in der Praxis durch eine Folge von Teilstücken ersetzt, welche die Idealfunktion möglichst annähern.

Im allereinfachsten Fall hat sich als (von der Fertigung her) Annäherung an das Polynom bzw. die Idealkurve AT2∗ ein strichpuznktiert angedeuteter keilförmiger Spalt AT21 erwiesen, (vergleiche Figur 7), dessen Öffnungswinkel a2h zweckmäßig zwischen 2 und 10° gewählt wird, vorzugsweise um 8°. Die Druckverteilung ist dann zwar nicht konstant über die Spaltlänge, sondern sie steigt von links nach rechts wegen des einen (gegenüber der Idealkurve) geringen Querschnitt aufweisenden Keilspaltes AT21 etwas an.

Ab der Ebene EB folgt (da hier die Idealkurve AT2∗ sehr flach verläuft) als Annäherung das rohrförmige Stück AT22 mit gleichbleibendem Querschnitt. Hier baut sich der Druck wegen des gleichbleibenden Querschnitts weitgehend wieder ab.

Um die Zentrierwirkung deutlich zu verbessern, kann dieser Prozeß in zwei aufeinander ausgerichteten aber voneinander getrennten Keilspalten zweimal vorgenommen werden. Der erste Keilspalt ist in den Figuren 5 und 6 dargestellt und mit AT11 bezeichnet, der zweite in den Figuren 7 und 8 und trägt das Bezugszeichen AT21. Damit und durch die Eigensteifigkeit der Fasern wird eine hervorragende Zentrierung erzeugt und gleichzeitig etwaige über die Eintrittsöffnung ET eingeschleppte Luft mit Sicherheit abgestreift.

Der Eingangskanal ET1 dient nur einer leichten Vorordnung der Lichtwellenleiter. Im ersten Ausgangskanal AT1 erfolgt mittels einer Schleppströmung eine erste Ordnung (symmetrische Positionierung) der Lichtwellenleiter, die im zweiten Ausgangskanal AT2 durch eine weitere Schleppströmung noch weiter verbessert wird. Die Druckfläche über der Werkzeuglänge ist bei perfekt symmetrischer Positionierung symmetrisch gleich. Bei einer etwaigen Dejustierung wird sie am dünneren Spalt größer und am dickeren Spalt kleiner, so daß automatisch eine Korrektur erfolgt. Je länger der keilförmige Bereich (z.B. AT21) gewählt wird, desto kürzer kann der nachfolgende rohrförmige Teil (z.B. AT22) gemacht werden und umgekehrt, wie aus AT11 und AT12 in Figur 2 ersichtlich ist.

Wegen der Zwickel zwischen den Lichtwellenleitern sind die Linien gleicher Geschwindigkeit rings um die Leiterstruktur aus den vier Lichtwellenleitern LW1 - LW4 natürlich nicht geradlinig verlaufend sondern im Zwickelbereich etwas abgesackt. Dies bedeutet einen gewissen Druck-Querausgleich, der aber durch die Keilform in x-Richtung (Längsrichtung der Lichtwellenleiter) nur eine gewisse Längsverschiebung (d.h. in x-Richtung) von Punkten gleichen Druckes bewirkt. Eine bestimmte Schleppgeschwindigkeit wird im Zwickelbereich also erst etwas später (d.h. bei einem größeren x) erreicht als im Nicht-Zwickelbereich. Da dies bis zum Austritt im rohrförmigen Bereich AT22 gilt, bleibt der justierende Außendruck bis zum Ende erhalten.

Bei dem Verfahren nach den vorhergehenden Figuren ist vorgesehen, daß der Auslaufkanal sich in der Höhe, d. h. senkrecht zur Breitenachse der Bandleitung in der gleichen Weise verjüngt, wie der Winkel, der in der Breitenachse der Bandleitung liegt. Je größer jedoch die Anzahl der Lichtwellenleiter wird (beispielsweise sind derzeit bereits Bandleitungen mit 16 nebeneinander angeordneten Lichtwellenleitern bekannt) um so geringer werden die Zentrierkräfte aufgrund der geschleppten Strömung, welche die Lichtwellenleiter in Richtung der Breitenachse des Bändchens erfahren.

Einer Weiterbildung der Erfindung liegt die Aufgabe zugrunde, eine Verbesserung hinsichtlich der Kräfte der geschleppten Strömung zu erreichen. Dies wird bei einem Verfahren der eingangs genannten Art erfindungsgemäß dadurch erreicht, daß ein zur Erzeugung der geschleppten Strömung dienender Auslaufkanal sich senkrecht zur Breitenachse der Bandleitung stärker verjüngt als in der Breitenachse der Bandleitung.

Durch eine derartige asymmetrische Auslegung der Verjüngung wird im Bereich der Breitenachse der Bandleitung wegen der verringerten Verjüngung und damit des kleineren Winkelwertes eine Vergrößerung der durch die geschleppte Strömung bewirkten Kräfte erzielt. Diese äußert sich in einer Verbesserung der Zentrierung der Lichtwellenleiter innerhalb des Lichtwellenleiter-Bändchens. Es ist zweckmäßig, wenn der Verjüngungswinkel des Auslaufkanals senkrecht zur Breitenachse 2 bis 4 mal so groß gewählt wird, wie der Winkel des Auslaufkanals in der Breitenachse der Bandleitung und zwar bezogen auf jeweils eine Ebene senkrecht zum Lichtwellenleiter-Bändchen und zu dessen Längsachse.

Allgemein gilt, daß die Winkelwerte senkrecht zur Breitenachse der Bandleitung zweckmäßig um so größer gewählt werden, je größer die Zahl der Lichtwellenleiter innerhalb eines Bändchens ist. Im allgemeinen wird es bei 4 Lichtwellenleitern je Bändchen noch ausreichend sein, den Verjüngungswinkel des Auslaufkanals in der Breitenachse der Bandleitung etwa ebenso groß zu wählen wie den Verjüngungswinkel senkrecht zur Breitenachse. In den Figuren 5,6 sowie 7 und 8

sind diese Winkel mit $\varphi a1h$, $\varphi a2h$ (= senkrecht zur Breitenachse) und $\varphi a1b$, $\varphi a2b$ (= in der Breitenachse) bezeichnet.

Bei 8 Lichtwellenleitern je Bändchen ist es zweckmäßig, diese Winkel unterschiedlich zu wählen, wobei vorteilhaft der Auslaufkanal senkrecht zur Breitenachse der Bandleitung etwa Winkelwerte zwischen 6° und 10° aufweist, während der Winkel des sich verjüngenden Auslaufkanals in der Breitenachse der Bandleitung zweckmäßig zwischen 3° und 4° gewählt wird.

Bei 16 Lichtwellenleitern je Bändchen ist es zweckmäßig, wenn der Winkel senkrecht zur Breitenachse der Bandleitung zwischen 8° und 12°, vorzugsweise um 10° gewählt wird, während der Winkel in der Breitenachse der Bandleitung beim Auslaufkanal zweckmäßig zwischen 3° und 5°, vorzugsweise 4° beträgt.

Wenn neben dem oder den Auslaßkanälen auch ein sich verjüngender Einlaufkanal verwendet wird (vgl. Figur 3 und 4), dann ist es zweckmäßig, auch diesen Einlaufkanal bei einer größeren Anzahl von Lichtwellenleitern innerhalb des Bändchens asymmetrisch so auszulegen, d.h., daß ein zur Erzeugung der geschleppten Strömung dienender Einlaufkanal sich senkrecht zur Breitenachse der Bandleitung stärker verjüngt als in der Breitenachse der Bandleitung. Zahlenmäßig werden vorteilhaft etwa die gleichen Werte verwendet, wie sie vorstehend im Zusammenhang mit der Gestaltung des Auslaufkanals beschrieben worden sind.

Die Weiterbildung der Erfindung betrifft weiterhin eine Einrichtung zur Durchführung des erfindungsgemäßen Verfahrens, welche dadurch gekennzeichnet ist, daß die Verjüngung eines Auslaßkanals senkrecht zur Breitenachse der Bandleitung größer gewählt ist als die Verjüngung der Wandung des Auslaßkanals in der Breitenachse der Bandleitung.

In der Figur 12 ist als Ausführungsbeispiel hierzu in perspektivischer Darstellung ein Auslaufkanal dargestellt, der z.B. dem Auslaufkanal AT1 nach Figur 2 entspricht und von den Lichtwellenleitern LW1 - LW16 in z-Richtung durchlaufen wird. In gleicher Weise gelten die Ausführungen auch für den zweiten Auslaufkanal AT2 der Figur 2, wobei im vorliegenden Beispiel für die Figur 12 die Bezugszeichen des ersten Auslaufkanals übernommen wurden. Der Öffnungswinkel des sich jeweils keilförmig verjüngenden Auslaufkanals AT1 ist in Richtung der Breitenachse x mit $\varphi a1b$ bezeichnet, während der Öffnungswinkel des Auslaufkanals AT1 senkrecht zur Breitenachse also in Richtung y $\varphi a1h$ beträgt. Wie aus der Figur 12 ersichtlich ist, sind die beiden Winkel $\varphi a1b$ und $\varphi a1h$ unterschiedlich gewählt, so daß ein asymmetrischer Einlaufkanals AT1 entsteht. Im einzelnen werden die Winkelwerte so festgelegt, daß senkrecht zur Breitenachse der Bandleitung LWB, also in y-Richtung der Auslaufkanal AT1 sich stärker verjüngt (d.h. steiler verläuft) als in der Breitenachse x der Bandleitung LWB. Der Winkel $\varphi a1h$ (in y-Richtung) x-Richtung). ist also größer gewählt als der Winkel $\varphi a1b$ (in Richtung). Auf diese Weise wird der Schleppdruck in d.h. die infolge der geschleppten Strömung erzeugten Kräfte Px größer als die Kräfte Py, die senkrecht zur Breitenachse der Bandleitung LWB wirken. Dadurch wird auch bei relativ großer Zahl von Lichtwellenleitern (im dargestellten Ausführungsbeispiel sind 16 Lichtwellenleiter LW1 - LW16 angenommen) eine hervorragende Zentrierung und gleichmäßige Anordnung der Lichtwellenleiter innerhalb des Lichtwellenleiterbändchens LWB sichergestellt.

Der dargestellte Effekt mit einer verbesserten Zentrierung infolge asymmetrischer Schleppstromwinkel $\varphi a1h$ und $\varphi a1b$ läßt sich zweckmäßig zusätzlich noch dadurch verbessern, daß auch die Spaltbreite im Austrittsbereich des sich verjüngenden Auslaufkanals AT1 unterschiedlich gewählt wird. Die gegenüber dem Außendurchmesser D der Lichtwellenleiter LW1 - LW16 beiderseits verbleibende Spaltbreite in x-Richtung, d.h. in Richtung der Längsachse der Bandleitung LWB ist mit dx bezeichnet, während die verbleibende Spaltenbreite senkrecht zur Breitenachse der Bandleitung LWB beiderseits mit dy bezeichnet ist. Dabei gilt die Festlegung, daß die verbleibende Spaltbreite in Richtung der Breitenachse, also dx, größer gewählt wird, als die verbleibende Spaltbreite senkrecht zur Breitenachse.

Die Größe der jeweils die Schichtstärke des Umhüllungsmaterials des Bändchens LWB oben und unten festlegenden Spalte dx und dy sollte im Bereich zwischen 10% und 45% des Durchmessers D eines Lichtwellenleiters betragen. Besonders zweckmäßig sind Werte um etwa 20% von D.

Geht man von einem Durchmesser D eines Lichtwellenleiters von 180μm aus und von Durchmesserschwankungen dD dieses Lichtwellenleiters um ± 3μm, dann ist die Austrittsöffnung des Auslaufkanals AT1 jedenfalls so zu wählen, daß es bei größt möglichem Durchmesser noch zu keinem Anstreifen des Lichtwellenleiter-Coatings an der Austrittsöffnung des Auslaufkanals AT1 kommt. Nimmt man an, daß der Austrittskanal in y-Richtung um 10% größer gewählt ist als der Durchmesser der Lichtwellenleiter von 180μm (Austrittsöffnung 180 + 18 = 198μm), dann ist selbst bei der maximalen dD-Toleranz mit einem Außendurchmesser von 180 + 3 = 183μm ein Anstreifen der beschichteten Lichtwellenleiter LW1 - LW16 an der Austrittsöffnung des Auslaufkanals AT1 in y-Richtung mit Sicherheit noch vermieden.

Anders liegen jedoch die Verhältnisse in x-Richtung, d.h. in der Breitenachse des Bändchens LWB. Dort summieren sich bei 16 Lichtwellenleitern LW1 - LW16 im ungünstigsten Fall für die Toleranzwerte dD der Durchmesser auf 16 · 3μm = 48μm, so daß die Austrittsöffnung am Ende des Auslaufkanals AT1 in der Breitenachse x entsprechend größer zu dimensionieren ist, um hier einen Toleranzausgleich ohne ein Anstreifen der Lichtwellenleiter an der Seitenwandung zu gewährleisten. Geht man von der Überlegung aus, daß die Austrittsöffnung um einen bestimmten Prozentsatz größer zu wählen ist (z.B. beispielsweise ebenfalls um 10% in x-Richtung), dann ist hier der mögliche Maximalwert der seitlichen Ausdehnung der 16 Lichtwellenleiter LW1 - LW16 zugrundezulegen mit 16(180 + 3) = 2928μm Dieser Wert ist dann um 10% von D größer zu wählen, um die Austrittsöffnung zu erhalten, nämlich zu 2928 + 18 = 2946μm. Gegenüber dem Idealdurchmesser D sind also die Spalte dx jeweils größer als die Spalte dy.

Wenn anstelle eines keilförmigen, also mit konstanten Öffnungswinkeln $\varphi a1b$ und $\varphi a1h$ ausgestatteten Auslaufkanals mit einem solchen gearbeitet wird, dessen Wandung entsprechend Figur 11 stetig gekrümmt ausgestaltet ist, dann gelten die grundsätzlichen Überlegungen für jeweils eine Schnittebene senkrecht zur Lichtwellenleiterachse sinngemäß. Dies bedeutet, daß die Krümmung bzw. die Tangente in z-Richtung gesehen in der x-y-Ebene senkrecht zur Breitenachse (d.h. in der Zeichnung oben und unten = Ober- bzw. Unterwand) jeweils einen größeren Winkel aufweist als die Tangente in der Breitenachse (d.h. in der Zeichnung rechts und links = Seitenwände).

Die Lichtwellenleiter werden der Beschichtungseinrichtung nach den vorhergehenden Figuren aus der Luft kommend zugeführt und in der Beschichtungseinrichtung selbst kommen sie erstmals mit dem Beschichtungsmaterial in Kontakt. Insbesondere bei sehr großen Durchlaufgeschwindigkeiten und/oder einer großen Anzahl von Lichtwellenleitern innerhalb eines Lichtwellenleiterbändchens werden in einem gewissen Umfang Luftbläschen von außen mit in die Beschichtungseinrichtung eingeschleppt. Ein Teil dieser Bläschen ist am Ausgang noch in dem Beschichtungsmaterial enthalten und verbleibt also beim Lichtwellenleiterbändchen.

Dies kann dort zu Inhomogenitäten führen, die unerwünscht sind. Weiterhin besteht die Gefahr, daß sich im Inneren der Beschichtungseinrichtung mit der Zeit größere Luftmengen bilden.

Einer Weiterbildung der Erfindung liegt daher die Aufgabe zugrunde, einen Weg aufzuweisen, wie diesen Schwierigkeiten in einfacher Weise begegnet werden kann. Diese Aufgabe wird erfindungsgemäß bei einem Verfahren der eingangs genannten Art dadurch gelöst, daß das Beschichtungsmaterial entgegen der Durchlaufrichtung der Lichtwellenleiter an diesen vorbeigeführt und nach außen abgeleitet wird.

Dadurch daß zumindest ein Teil des Beschichtungsmaterials praktisch im Gegenstromprinzip an den Lichtwellenleitern entlanggeführt wird, ist es für die Luftbläschen nur sehr schwer möglich, sich in Durchlaufrichtung der Lichtwellenleiter allzuweit vorwärts zu bewegen. Unerwünschte Luftansammlungen sowie Luftbläscheneinschlüsse bei der eigentlichen Umhüllung des Lichtwellenleiterbändchens sind demnach durch die Erfindung weitgehend ausgeschlossen.

Gemäß einer vorteilhaften Weiterbildung der Erfindung werden die Lichtwellenleiter vorher zusätzlich durch eine Vakuumkammer hindurchgeführt, in der an die Lichtwellenleiter ein Unterdruck angelegt wird. Durch diesen Unterdruck wird sichergestellt, daß nur ein sehr geringer Teil von Luftbläschen überhaupt noch bis zu dem Bereich vordringt, in dem das Beschichtungsmaterial vorhanden ist.

Die Erfindung betrifft weiterhin eine Einrichtung zur Herstellung einer optischen Bandleitung, welche dadurch gekennzeichnet ist, daß vor der eigentlichen Beschichtungseinrichtung eine Überlaufstufe vorgesehen ist, die über mindestens einen Verbindungskanal mit dem das Beschichtungsmaterial enthaltenden Bereich der Beschichtungseinrichtung verbunden ist.

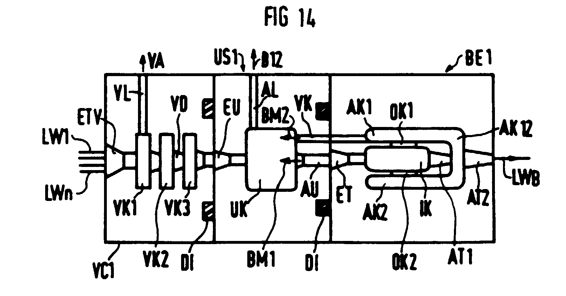

Die Beschichtungseinrichtung nach Figur 13 zeigt in detaillierterer Darstellung Einzelheiten des Aufbaus der Fertigungslinie nach Figur 10. Die dort verwendeten Bezugszeichen wurden, soweit sie übereinstimmen, auch hier für gleiche oder entsprechende Teile verwendet. Eine Reihe von nebeneinander angeordneten Vorratsspulen VS1n (in Figur 13 in der Tiefe der Zeichnung hintereinanderliegend gestaffelt) liefern eine Anzahl von nebeneinanderliegenden Lichtwellenleitern LW1n, die zunächst in eine Vakuumstufe VC einlaufen, deren näherer Aufbau in Figur 14 dargestellt ist. Anschließend folgt eine Überlauf- oder Rückführungsstufe US, deren Einzelheiten ebenfalls aus Figur 14 entnehmbar sind. Daran schließt sich die Beschichtungseinrichtung BE an, deren Aufbau im einzelnen aus Figur 14 sowie aus den Figuren 1 und 2 entnehmbar ist. Die Einheiten VC, US und BE sind jeweils aus zwei Hälften VC1, VC2; US1, US2; BE1, BE2 aufgebaut, die in der Trennlinie (zusammenfallend mit der Durchlaufebene der Lichtwellenleiter LW1n) zusammengesetzt sind. Der Aufbau der jeweiligen Hälften VC1, VC2 sowie US1, US2 und BE1, BE2 ist jeweils spiegelbildlich gleich gewählt. Die Elemente VC, US und BE sind mechanisch zu einem Block vereinigt und z.B. durch Schrauben miteinander verbunden. Die mit der gemeinsamen Umhüllung versehenen Lichtwellenleiter LW1n verlassen schließlich die Beschichtungseinrichtung BE als Lichtwellenleiterbändchen LWB und werden über einen Abzug RZ1 und die zugehörige Umlaufrolle UR einer Aufwickeltrommel AT zugeführt.

Das Beschichtungsmaterial BM ist in einem Vorratsbehälter VB1 enthalten, der über eine ein Ventil VE1 enthaltende Rohrleitung mit einem Vorratsbehälter VB2 in Verbindung steht. Der Vorratsbehälter VB2 ist zweckmäßig mit einer Heizeinrichtung verbunden und wird auf einer genau für den Beschichtungsprozeß passenden Temperatur gehalten. Zusätzlich wird mittels einer Druckeinrichtung OTE ein bestimmter relativ kleiner Überdruck PT1 erzeugt, der den Transport des Beschichtungsmaterial BM in die Beschichtungseinrichtung BE bewirkt. Zur Messung des Überdrucks ist ein Manometer MN1 vorgesehen. Am Ausgang des Vorratsbehälters VB2 ist ein weiteres Ventil VE2 vorgesehen. Das Beschichtungsmaterial BM gelangt zunächst in die Beschichtungseinrichtung BE, die der Beschichtungseinrichtung mit den gleichen Bezugszeichen nach den Figuren 1 und 2 entspricht. Dort wird die Zentrierung der Lichtwellenleiter und ihre allseitige Umhüllung mit dem Beschichtungsmaterial BM durchgeführt. Zusätzlich ist jedoch vorgesehen, daß ein Teil des Beschichtungsmaterials BM entgegen der Durchlaufrichtung der Lichtwellenleiter LW1n an diesen entlangströmt und in eine Überlauf- oder Rückführstufe US gelangt, deren Einzelheiten in Figur 14 dargestellt sind. Ein Teil des Beschichtungsmaterials BM wird aus dieser Überlaufstufe US entnommen und über ein Ventil VE3 einem Vorratsbehälter VB3 zugeführt. Da hierbei unter Umständen auch Luftbläschen mit in dem zurücklaufenden Beschichtungsmaterial BM12 enthalten sind, wird an dem Vorratsbehälter VB3 ein Unterdruck PT2 angelegt, wofür die Absaugeinrichtung UTE dient. Mittels eines Manometers MN2 kann der jeweils am Vorratsbehälter VB3 vorhandene Unterdruck fortlaufend bestimmt werden, wobei Werte zwischen 0,1 bar und 0,5 bar zweckmäßig sind. Über ein Ventil VE4 und eine Förderpumpe PP3 wird das überschüssige Beschichtungsmaterial BM12 aus dem Vorratsbehälter VB3 entnommen und in den Hauptvorratsbehälter VB1 zurückgeführt.

Um das Einschleppen der von Luftbläschen in die Beschichtungseinrichtung von Anfang an möglichst weitgehend zu vermeiden, ist vor der Überlauf- bzw. Rückführstufe US noch eine Unterdruckstufe VC vorgesehen. Diese Unterdruckstufe VC ist in Einzelheiten in Figur 14 näher dargestellt. An ihr wird mittels einer Absaugeinrichtung VE ein Unterdruck angelegt, dessen Größe mittels eines Manometers MN3 bestimmt werden kann. Der Unterdruck liegt zweckmäßig in der Größenordnung von etwa 0,2 bis 0,5 bar, vorzugsweise um 0,3 bar.

In Figur 14 ist im rechten Teil die untere Hälfte BE1 der Beschichtungseinrichtung BE nach Figur 13 dargestellt. Der Aufbau entspricht dem der Figuren 1 und 2. Die Zuführung des Beschichtungsmaterial BM erfolgt über einen in der Tiefe liegenden Zuführungskanal, der über Verbindungskanäle OK1 und OK2 sowohl mit dem Innenkanal IK als auch den beiden etwa parallel verlaufenden Außenkanälen AK1 und AK2 in Verbindung steht. Diese Kanäle sind weiterhin im Auslaufbereich über einen Querkanal AK12 miteinander verbunden. Somit ist der gesamte Bereich der als Vertiefungen ausgebildeten Elemente AK1, AK12, AK2 und IK sowie der Einlauftrichter ET und die Auslauftrichter AT1 und AT2 mit Beschichtungsmaterial gefüllt. Zwischen dem Außenkanal AK1 und der vor der eigentlichen Beschichtungseinrichtung liegenden Überlaufstufe US ist ein Verbindungskanal VK vorgesehen, über den ein Teil des Beschichtungsmaterials (angedeutet durch den Pfeil BM2) in eine Kammer UK der Rückführstufe US gelangt. Ein weiterer Teil BM1 des Beschichtungsmaterials gelangt über den Einlauftrichter ET und den Auslauftrichter AU an den hindurchlaufenden Lichtwellenleitern LW1 - LWn entlang ebenfalls in die Kammer UK. Durch dieses im "Gegenstromprinzip" entgegen der Durchlaufrichtung der Lichtwellenleiter von rechts nach links strömenden Anteil BM1 des Beschichtungsmaterials tritt eine Art "Abstreifwirkung" für von den Lichtwellenleitern LW1 - LWn mitgerissene Luftbläschen auf, die somit nicht in die eigentliche Beschichtungseinrichtung BE gelangen können. An die Kammer UK der Vorstufe US ist ein Überlaufkanal AL angeschlossen, über den das gesamte überschüssige Beschichtungsmaterial BM12 ablaufen kann und so in den Vorratsbehälter VB3 nach Figur 13 gelangt. Die Vorwärtsbewegung des Beschichtungsmaterials durch die Beschichtungseinrichtung BE hindurch bis zur Vorstufe US und schließlich bis zum Vorratsbehälter VB3 wird durch den Überdruck PT1 im Vorratsbehälter VB1 bewirkt. Die Vorstufe US ist in geeigneter Weise an die eigentliche Beschichtungseinrichtung BE angeflanscht, z.B. durch entsprechende Verbindungsschrauben, wobei durch Dichtungen DI im Bereich der Stirnseite der Vorstufe US1 eine Abdichtung bewirkt und somit ein Austritt von Beschichtungsmaterial verhindert ist.

Eine weitere Verbesserung hinsichtlich des Einschleppens von Luftbläschen ist durch eine Vakuumstufe VC erreichbar, die vor der Überlaufstufe US angeordnet ist. Das Unterteil VC1 der zweiteilig ausgebildeten Unterdruckstrufe VC ist in Figur 14 in Draufsicht dargestellt. Hier sind mehrere quer zur Durchlaufachse der Lichtwellenleiter LW1 - LWn verlaufende Kammern VK1 - VK3 vorgesehen, die jeweils über einen durchgehenden Verbindungskanal VD miteinander verbunden sind. Dieser Verbindungskanal VD schließt sich an einen Einlauftrichter ETV an, dem die Lichtwellenleiter LW1 - LWn zugeführt werden. Der Einlauftrichter ETV und der Verbindungskanal VD bewirken zusätzlich eine gewisse Vorordnung der Lichtwellenleiter. Seine Hauptaufgabe besteht aber darin, mittels eines Unterdrucks VA das Vordringen von Luft in die Vorstufe US und vor allem in die Beschichtungseinrichtung BE zu verhindern. Hierzu ist zumindest einer der Querkanäle, z.B. VK1 über eine Verbindungsleitung VL an die Absaugeinrichtung VE nach Figur 1 angeschlossen, wobei der angelegte Unterdruck zweckmäßig in der Größenordnung zwischen 0,1 bar und 0,5 bar, vorzugsweise bei 0,3 bar liegt. Da die verschiedenen Kammern VK1 - VK3 über den Durchgangskanal VD miteinander verbunden sind, gelangt der angelegte Unterdruck auch in die anderen Kammern, so daß zunehmend weniger Luft im Bereich der Lichtwellenleiter LW1 - LWn vorhanden ist. Die Breite des Durchgangskanals VD ist im schmalsten Bereich zweckmäßig nur um etwa + 5% größer gewählt als die Außenabmessungen der unmittelbar aneinandergelegten Lichtwellenleiter LW1 - LWn. Die einzelnen Teilstücke des Verbindungskanals VD sind ebenfalls zweckmäßig etwa trichterförmig verbreitert, um einen möglichst ungehinderten Durchlauf gewährleisten zu können. Auch zwischen der Vakuumstufe VC und der Vorstufe US sind Dichtungen DI vorgesehen, um einen druckdichten Anschluß zu gewährleisten.

Sollte ein Teil des Beschichtungsmaterials BM1, BM2 in der Kammer UK über den Einlauftrichter EU noch bis zur Absaugstufe VC gelangen, dann sammelt sich dieses in der letzten Vorkammer VK3. Durch die Anordnung von mehreren Kammern VK1 - VK3 wird der Unterdruck durch die Drosselung der Fasereinlaufspalte so weit reduziert, daß das Harz kaum in die Absaugkammern einlaufen kann.

**Patentansprüche**

1. Verfahren zur Herstellung einer optischen Bandleitung (LWB), bei dem mehrere vorbeschichtete Lichtwellenleiter (LW1 - LW4) nebeneinander durch eine sie umschließende, einen Auslaufkanal (AT1/AT2) aufweisende Beschichtungseinrichtung (BE) hindurchgeführt werden, der ein zum Einschließen der Lichtwellenleiter (LW1 - LW4) dienendes Beschichtungsmaterial (BM) zugeführt wird,
   **dadurch gekennzeichnet,**
   daß die Lichtwellenleiter (LW1 - LW4) in der Beschichtungseinrichtung (BE) ohne Berührung mit Wandungsteilen oder Führungseinrichtungen und somit frei laufend derart geführt werden, daß sie im wesentlichen nur mit dem zugeführten Beschichtungsmaterial (BM) in Berührung kommen, daß der Auslaufkanal (AT1/AT2) in seinem kleinsten Querschnitt breiter gewählt ist als n(dl), wobei n die Zahl der Lichtwellenleiter (LW1 - LW4) und dl deren Außendurchmesser bedeutet, und daß durch die Längsbewegung der Lichtwellenleiter (LW1 - LW4) eine geschleppte Strömung des flüssigen Beschichtungsmaterials (BM) erzeugt wird, wobei die Viskosität des Beschichtungsmaterials und die Durchlaufgeschwindigkeit so eingestellt werden, daß die sich ergebende Schleppströmung die Lichtwellenleiter (LW1 - LW4) in der durch das Beschichtungsmaterial (BM) gebildeten Umhüllung nach Durchlauf des Auslaufkanals (AT1/AT2) zentriert.

2. Verfahren nach Anspruch 1,
   **dadurch gekennzeichnet,**
   daß die Lichtwellenleiter (LW1 bis LW4) vor der Zuführung des Beschichtungsmaterials (BM) durch einen der Vorordnung dienenden Einlaufkanal (ET) geführt werden.

3. Verfahren nach Anspruch 2,
   **dadurch gekennzeichnet**,
   daß die Lichtwellenleiter zunächst durch einen trichterförmigen Teilbereich (ET1) des Einlaufkanals (ET) mit Rechteckquerschnitt bewegt werden.

4. Verfahren nach Anspruch 3,
   **dadurch gekennzeichnet**,
   daß nach dem trichterförmigen Teilbereich (ET1) die Lichtwellenleiter durch einen rohrförmigen Teilbereich (ET2) des Einlaufkanals (ET) geführt werden.

5. Verfahren nach einem der Ansprüche 2 bis 4,
   **dadurch gekennzeichnet**,
   daß die Lichtwellenleiter im Einlaufkanal (ET) mit ausreichendem Wandabstand geführt werden.

6. Verfahren nach Anspruch 5,
   **dadurch gekennzeichnet**,
   daß die Breite (be) des Einlaufkanals (ET) an der schmälsten Stelle (ET2) zwiuschen 0,5 und 0,2 mm größer gewählt ist als n(dl), wobei n die Zahl der Lichtwellenleiter und dl deren Außendurchmesser bedeutet.

7. Verfahren nach einem der Ansprüche 5 oder 6,
   **dadurch gekennzeichnet**,
   daß die Höhe (he) des Einlaufkanals (ET) an seiner schmalsten Stelle um zwischen 0,5 mm und 0,2 mm größer gewählt ist als der Außendurchmesser dl der Lichtwellenleiter (LW1 bis LW4)

**8.** Verfahren nach einem der Ansprüche 3 bis 7,
**dadurch gekennzeichnet**,
daß der trichterförmige Teilbereich (ET1) eine Länge um 5 mm aufweist.

**9.** Verfahren nach einem der Ansprüche 4 bis 8,
**dadurch gekennzeichnet**,
daß der rohrförmige Teilbereich (ET2) eine Länge zwischen 0,5 und 6 mm aufweist.

**10.** Verfahren nach einem der vorhergehenden Ansprüche,
**dadurch gekennzeichnet**,
daß das Beschichtungsmaterial (BM) unter einem leichten Vordruck zugeführt wird, und daß der Vordruck für die Zuführung des Beschichtungsmaterials (BM) so gewählt wird, daß im Auslaufbereich der Beschichtungseinrichtung (BE) die Schleppströmung die vom Vordruck erzeugte Druckströmung überwiegt.

**11.** Verfahren nach einem der Ansporüche 2 bis 10,
**dadurch gekennzeichnet**,
daß ein geringer Teil des Beschichtungsmaterials (BM) entgegen der Durchlaufrichtung der Lichtwellenleiter (LW1-LW4) dem Einlaufkanal (ET) zugeführt wird.

**12.** Verfahren nach einem der vorhergehenden Ansprüche,
**dadurch gekennzeichnet**,
daß die Lichtwellenleiter durch eine innere Kammer (IK) geführt werden, welcher das Beschichtungsmaterial (BM) zugeführt wird, wobei die Lichtwellenleiter in dieser Kammer nur dem Beschichtungsmaterial in Berührung gebracht werden.

**13.** Verfahren nach Anspruch 12,
**dadurch gekennzeichnet,**
daß das Beschichtungsmaterial (BM) zunächst zwei äußeren Kammern (AK1, AK2) zugeführt wird, von denen aus die innere Kammer (IK) mit Beschichtungsmaterial (BM) versorgt wird.

**14.** Verfahren nach einem der vorhergehenden Ansprüche,
**dadurch gekennzeichnet**,
daß die Lichtwellenleiter (LW1 bis LW4) nach dem Durchlaufen des Beschichtungsmaterials (BM) mindestens einem sich in Durchlaufrichtung verjüngenden Auslaufkanal (AT1/AT2) zugeführt werden.

**15.** Verfahren nach Anspruch 14,
**dadurch gekennzeichnet**,
daß die Lichtwellenleiter (LW1 bis LW4) beim Auslaufkanal (AT1) zunächst durch einen etwa trichterförmigen Teilbereich (AT11/AT21) hindurchgeführt werden.

**16.** Verfahren nach Anspruch 15,
**dadurch gekennzeichnet,**
daß die Lichtwellenleiter nach Duchlaufen des etwa trichterförmigen Teilbereichs (AT1/AT21) durch einen rohrförmigen Teilbereich (AT12/AT22) hindurchgeführt werden.

**17.** Verfahren nach einem der Ansprüche 14 - 16,
**dadurch gekennzeichnet**,
daß der Winkel ($\varphi a1h/\varphi a2h$) des Auslaufkanals (AT1/AT2) in der Höhe, d.h. senkrecht zur Breitenachse der Bandleitung (LWB) zwischen 5° und 20°, vorzugsweise um 8°, gewählt wird.

**18.** Verfahren nach einem der Ansprüche 14 oder 17,
**dadurch gekennzeichnet**,
daß der Winkel ($\varphi a1b/\varphi a2b$) im Verjüngungsbereich in der Breite zwischen 5° und 20°, vorzugsweise um 8°, gewählt wird.

**19.** Verfahren nach einem der vorhergehenden Ansprüche,
**dadurch gekennzeichnet**,
daß die kleinste Breite (ba1/ba2) des Auslaufkanals (AT1/ AT2) um 0,05 bis 0,2 mm größer gewählt ist als n(d1).

**20.** Verfahren nach einem der vorhergehenden Ansprüche,
**dadurch gekennzeichnet**,
daß die Höhe des Auslaufkanals (AT1/AT2) in seinem kleinsten Querschnitt größer gewählt ist als der Außendurchmesser (d1) der Lichtwellenleiter (LW1 - LW4).

**21.** Verfahren nach Anspruch 20,
**dadurch gekennzeichnet**,
daß die Höhe (ha1/ha2) um 0,05 bis 0,2 mm größer gewählt ist als der Außendurchmesser (dl) der Lichtwellenleiter (LW1 - LW4).

**22.** Verfahren nach einem der vorhergehenden Ansprüche,
**dadurch gekennzeichnet**,
daß die Lichtwellenleiter (LW1 bis LW4) nacheinander durch zwei Auslaßkanäle (AT1/AT2) hindurchgeführt werden und daß in jedem dieser Auslaßkanäle (AT1/AT2) eine Schleppströmung erzeugt wird, die eine Justierung der Lichtwellenleiter (LW1 bis LW4) bewirkt.

**23.** Verfahren nach Anspruch 22,
dadurch gekennzeichnet,
daß zwischen den beiden Auslaßkanälen (AT1/AT2) die Lichtwellenleiter (LW1 bis LW4) erneut durch zuströmendes Beschichtungsmaterial (BM) hindurchgeführt werden.

**24.** Verfahren nach einem der vorhergehenden Ansprüche,
**dadurch gekennzeichnet**,
daß daß ein zur Erzeugung der geschleppten Strömung dienender Auslaufkanal sich senkrecht zur Breitenachse (y) der Bandleitung starker verjüngt als in der Breitenachse der Bandleitung.

**25.** Verfahren nach einem der vorhergehenden Ansprüche,
**dadurch gekennzeichnet**,
daß das Beschichtungsmaterial (BM) entgegen der Durchlaufrichtung der Lichtwellenleiter (LW1n) an diesen vorbeigeführt und nach außen abgeleitet wird.

**26.** Verfahren nach Anspruch 25,
**dadurch gekennzeichnet**,
daß an dem Vorratsbehalter (VB3) ein Unterdruck angelegt wird.

**27.** Verfahren nach einem der Ansprüche 25 und 26,
**dadurch gekennzeichnet**,
daß das Beschichtungsmaterial (BM) aus einem Vorratsbehalter (VB1) entnommen wird, an dem ein Überdruck (PT1) angelegt wird.

**28.** Verfahren nach einem der Ansprüche 25 bis 27,
**dadurch gekennzeichnet**,
daß vor der Beschichtung der Lichtwellenleiter (LW1n) diese durch eine Unterdruckstufe (VC) hindurchgeführt werden, in der ein Unterdruck an die Lichtwellenleiter angelegt wird.

**29.** Einrichtung zur Herstellung einer optischen Bandleitung (LWB), bei der mehrere Lichtwellenleiter (LW1 - LW4) nebeneinander in einer sie umschließenden Beschichtungseinrichtung (BE) in mindestens einem Auslaufkanal (AT1/AT2) geführt sind, der ein zum Einschließen der Lichtwellenleiter (LW1 - LW4) dienendes Beschichtungsmaterial (BM) zugeführt ist,
**dadurch gekennzeichnet,**
daß der Auslaufkanal (AT1/AT2) in seinem kleinsten Querschnitt breiter gewählt ist als n(d1), wobei n die Zahl der Lichtwellenleiter (LW1 - LW4) und d1 deren Außendurchmesser bedeutet, wobei die Beschichtungseinrichtung derart ausgeführt ist daß die Lichtwellenleiter (LW1 - LW4) in der Beschichtungseinrichtung (BE) ohne Berührung mit Wandungsteilen oder Führungseinrichtungen und somit frei laufend derart geführt sind, daß sie im wesentlichen nur mit dem zugeführten Beschichtungsmaterial (BM) in Berührung kommen, und daß die Viskosität des Beschichtungsmaterials und die Durchlaufgeschwindigkeit so gewählt sind, daß durch die Längsbewegung der Lichtwellenleiter (LW1 - LW4) in dem Auslaufkanal eine geschleppte Strömung des flüssigen Beschichtungsmaterials (BM) entsteht, welche die Lichtwellenleiter (LW1 - LW4) in der durch das Beschichtungsmaterial (BM) gebildeten Um-

EP 0 582 944 B1

hüllung nach Durchlauf des Auslaufkanals (AT1/AT2) zentriert.

**30.** Einrichtung nach Anspruch 29,
**dadurch gekennzeichnet**,
daß der Auslaufkanal sich in Durchlaufrichtung verjüngt.

**31.** Einrichtung nach Anspruch 30
**dadurch gekennzeichnet**,
daß die Verjungung des Auslaufkanals senkrecht zur Breitenachse der Bandleitung größer gewählt ist als die Verjüngung der Wandung des Auslaufkanals in der Breitenachse der Bandleitung.

**32.** Einrichtung nach Anspruch 31,
**dadurch gekennzeichnet**,
daß der Winkel des Auslaufkanals senkrecht zur Breitenachse 2- bis 4-mal so groß gewählt ist wie der Winkel des Auslaufkanals in der Breitenachse der Bandleitung.

**33.** Einrichtung nach einem der Ansprüche 31 und 32,
**dadurch gekennzeichnet**,
daß bei Verwendung eines Einlaufkanals dieser sich senkrecht zur Breitenachse der Bandleitung stärker verjüngt als in der Breitenachse der Bandleitung.

**34.** Einrichtung nach einem der Ansprüche 29 bis 33,
**dadurch gekennzeichnet**,
daß vor der eigentlichen Beschichtungseinrichtung (BE) eine Überlaufstufe (UK) vorgesehen ist, die über mindestens einen Verbindungskanal (VK) mit dem das Beschichtungsmaterial (BM) enthaltenden Bereich der Beschichtungseinrichtung (BE) verbunden ist.

**35.** Einrichtung nach einem der Ansprüche 29 bis 34,
**dadurch gekennzeichnet**,
daß vor der Beschichtungseinrichtung (BE) insbesondere vor der Überlaufstufe (US) eine Unterdruckstufe (VC) vorgesehen ist, in welcher an die Lichtwellenleiter (LWln) ein Unterdruck angelegt ist.

## Claims

**1.** Method for producing an optical ribbon cable (LWB), in which a plurality of precoated optical fibres (LW1 - LW4) are guided next to one another through a coating device (BE) which surrounds them, has an outlet channel (AT1/AT2) and is fed a coating material (BM) serving to enclose the optical fibres (LW1 - LW4), characterized in that the optical fibres (LW1 - LW4) are guided in the coating device (BE) without touching wall parts or guiding devices, and thus in a freely running fashion, in such a way that they essentially come into contact only with the fed coating material (BM), in that the outlet channel (AT1/AT2) is selected to have its smallest cross-section wider than n(d1), n denoting the number of the optical fibres (LW1 - LW4) and dl the outside diameter thereof, and in that the longitudinal movement of the optical fibres (LW1 - LW4) producing a drag flow of the liquid coating material (BM), the viscosity of the coating material and the rate of throughput being set such that the resultant drag flow centres the optical fibres (LW1 - LW4) in the jacket formed by the coating material (BM) after traversal of the outlet channel (AT1/AT2).

**2.** Method according to Claim 1, characterized in that before the feeding of the coating material (BM) the optical fibres (LW1 - LW4) are guided through an inlet channel (ET) serving to produce preliminary order.

**3.** Method according to Claim 2, characterized in that the optical fibres are initially moved through a funnel-shaped subregion (ET1) of the inlet channel (ET) having a rectangular cross-section.

**4.** Method according to Claim 3, characterized in that following the funnel-shaped subregion (ET1) the optical fibres are guided through a tubular subregion (ET2) of the inlet channel (ET).

**5.** Method according to one of Claims 2 to 4, characterized in that the optical fibres are guided in the inlet channel (ET) at an adequate spacing from the wall.

17

6. Method according to Claim 5, characterized in that the width (be) of the inlet channel (ET) is selected to be between 0.5 and 0.2 mm larger at its narrowest point (ET2) than n(d1), n signifying the number of the optical fibres and d1 the outside diameter.

7. Method according to one of Claims 5 or 6, characterized in that the height (he) of the inlet channel (ET) is selected to be between 0.5 mm and 0.2 mm larger at its narrowest point than the outside diameter dl of the optical fibres (LW1 to LW4).

8. Method according to one of Claims 3 to 7, characterized in that the funnel-shaped subregion (ET1) has a length of approximately 5 mm.

9. Method according to one of Claims 4 to 8, characterized in that the tubular subregion (ET2) has a length of between 0.5 and 6 mm.

10. Method according to one of the preceding claims, characterized in that the coating material (BM) is fed at a low inlet pressure, and in that the inlet pressure is selected for feeding the coating material (BM) such that in the outlet region of the coating device (BE) the drag flow prevails over the pressure flow produced by the inlet pressure.

11. Method according to one of Claims 2 to 10, characterized in that a small portion of the coating material (BM) is fed to the inlet channel (ET) against the throughput direction of the optical fibres (LW1-LW4).

12. Method according to one of the preceding claims, characterized in that the optical fibres are guided through an inner chamber (IK) which is fed the coating material (BM), the optical fibres being brought into contact only with the coating material in this chamber.

13. Method according to Claim 12, characterized in that the coating material (BM) is initially fed to two outer chambers (AK1, AK2) from which the inner chamber (IK) is supplied with coating material (BM).

14. Method according to one of the preceding claims, characterized in that after traversing the coating material (BM) the optical fibres (LW1 to LW4) are fed at least to an outlet channel (AT1/AT2) tapering in the throughput direction.

15. Method according to Claim 14, characterized in that at the outlet channel (AT1) the optical fibres (LW1 to LW4) are initially guided through an approximately. funnel-shaped subregion (AT11/AT21).

16. Method according to Claim 15, characterized in that after traversing the approximately funnel-shaped subregion (AT11/AT21) the optical fibres are guided through a tubular subregion (AT12/AT22).

17. Method according to one of Claims 14-16, characterized in that the angle ($\phi$a1h/$\phi$a2h) of the outlet channel (AT1/AT2) is selected height-wise, that is to say perpendicular to the transverse axis of the ribbon cable (LWB), to be between 5° and 20°, preferably approximately 8°.

18. Method according to one of Claims 14 or 17, characterized in that the angle ($\phi$a1b/$\phi$a2b) in the tapering region is selected width-wise to be between 5° and 20°, preferably approximately 8°.

19. Method according to one of the preceding claims, characterized in that the smallest width (ba1/ba2) of the outlet channel (AT1/AT2) is selected to be 0.05 to 0.2 mm larger than n(d1).

20. Method according to one of the preceding claims, characterized in that the height of the outlet channel (AT1/AT2) at its smallest cross-section is selected to be greater than the outside diameter (dl) of the optical fibres (LW1 - LW4).

21. Method according to Claim 20, characterized in that the height (ha1/ha2) is selected to be 0.05 to 0.2 mm larger than the outside diameter (d1) of the optical fibres (LW1 - LW4).

22. Method according to one of the preceding claims, characterized in that the optical fibres (LW1 to LW4) are guided sequentially through two outlet channels (AT1-/AT2), and in that a drag flow which effects an adjustment of the optical fibres (LW1 to LW4) is produced in each of these outlet channels (AT1/AT2).

23. Method according to Claim 22, characterized in that between the two outlet channels (AT1/AT2) the optical fibres (LW1 to LW4) are again guided through oncoming coating material (BM).

24. Method according to one of the preceding claims, characterized in that an outlet channel serving to produce the drag flow tapers perpendicular to the transverse axis (y) of the ribbon cable more strongly than in the transverse axis of the ribbon cable.

25. Method according to one of the preceding claims, characterized in that the coating material (BM) is guided against the throughput direction of the optical fibres (LW1n) past the latter and is drained off to the outside.

26. Method according to Claim 25, characterized in that an underpressure is applied to the reservoir (VB3).

27. Method according to one of Claims 25 and 26, characterized in that the coating material (BM) is taken from a reservoir (VB1) to which an overpressure (PT1) is applied.

28. Method according to one of Claims 25 to 27, characterized in that before the coating of the optical fibres (LW1n) the latter are guided through an underpressure stage (VC) in which an underpressure is applied to the optical fibres.

29. Device for producing an optical ribbon cable (LWB), in which a plurality of optical fibres (LW1 - LW4) are guided next to one another in a coating device (BE) surrounding them in at least one outlet channel (AT1/AT2), to which coating device coating material (BM) serving to enclose the optical fibres (LW1 - LW4) is fed, characterized in that the smallest cross-section of the outlet channel (AT1/AT2) is selected to be wider than n(d1), n denoting the number of the optical fibres (LW1 - LW4) and d1 the outside diameter thereof, the coating device being designed in such a way that the optical fibres (LW1 - LW4) are guided in the coating device (BE) without touching wall parts or guiding devices, and thus in a freely running fashion, in such a way that they essentially come into contact only with the fed coating material (BM), and in that the vis-cosity of the coating material and the rate of throughput are selected such that the longitudinal movement of the optical fibres (LW1 - LW4) in the outlet channel produces a drag flow of the liquid coating material (BM) which centres the optical fibres (LW1 - LW4) in the jacket formed by the coating material (BM) after traversal of the outlet channel (AT1/AT2).

30. Device according to Claim 29, characterized in that the outlet channel tapers in the throughput direction.

31. Device according to Claim 30, characterized in that the tapering of the outlet channel perpendicular to the transverse axis of the ribbon cable is selected to be larger than the tapering of the wall of the outlet channel in the transverse axis of the ribbon cable.

32. Device according to Claim 31, characterized in that the angle of the outlet channel perpendicular to the transverse axis is selected to be 2 to 4 times larger than the angle of the outlet channel in the transverse axis of the ribbon cable.

33. Device according to one of Claims 31 and 32, characterized in that when an inlet channel is used the latter tapers perpendicular to the transverse axis of the ribbon cable more strongly than in the transverse axis of the ribbon cable.

34. Device according to one of Claims 29 to 33, characterized in that there is provided upstream of the actual coating device (BE) an overflow stage (US) which is connected via at least one connecting channel (VK) to that region of the coating device (BE) which contains the coating material (BM).

35. Device according to one of Claims 29 to 34, characterized in that there is provided upstream of the coating device (BE), in particular upstream of the overflow stage (US), an underpressure stage (VC) in which an underpressure is applied to the optical fibres (LW1n).

**Revendications**

1. Procédé de fabrication d'un guide d'ondes lumineuses à ruban (LWB), selon lequel on fait passer plusieurs fibres optiques prérevêtues (LW1 à LW4) les unes à côté des autres dans un dispositif de revêtement (BE) qui les entoure, qui comporte un canal de sortie (AT1/AT2) et auquel on envoie un matériau de revêtement (BM) servant à enrober les fibres optiques (LW1 à LW4),
    caractérisé par le fait que l'on fait passer les fibres optiques (LW1 à LW4) dans le dispositif de revêtement (BE) sans contact avec des parties des parois ou avec des dispositifs de guidage, et qu'ainsi on les fait passer librement de sorte qu'elles ne viennent en contact sensiblement qu'avec le matériau de revêtement (BM) envoyé, que l'on choisit le canal de sortie (AT1/AT2) dans sa plus petite section plus large que n(d1), où n est le nombre des fibres optiques (LW1 à LW4) et dl leur diamètre extérieur, et que le mouvement dans le sens de la longueur des fibres optiques (LW1 à LW4) produit un courant entraîné du matériau liquide de revêtement (BM), la viscosité du matériau de revêtement et la vitesse de passage étant réglées de sorte que le courant d'entraînement résultant centre les fibres optiques (LW1 à LW4) dans la gaine, formée par le matériau de revêtement (BM), après avoir passé dans le canal de sortie (AT1/AT2).

2. Procédé selon la revendication 1,
caractérisé par le fait que l'on fait passer les fibres optiques (LW1 à LW4), avant l'envoi du matériau de revêtement (BM), dans un canal d'entrée (ET) servant à la mise en place préalable.

3. Procédé selon la revendication 2,
caractérisé par le fait que l'on déplace d'abord les fibres optiques dans une partie (ET1) en forme d'entonnoir du canal d'entrée (ET) ayant une section rectangulaire.

4. Procédé selon la revendication 3,
caractérisé par le fait que l'on fait passer les fibres optiques, après la partie (ET1) en forme d'entonnoir, dans une partie tubulaire (ET2) du canal d'entrée (ET).

5. Procédé selon l'une des revendications 2 à 4,
caractérisé par le fait que l'on fait passer les fibres optiques dans le canal d'entrée (ET) à une distance suffisante par rapport aux parois.

6. Procédé selon la revendication 5,
caractérisé par le fait que l'on choisit la largeur (be) du canal d'entrée (ET), en son point le plus étroit (ET2), plus grande de 0,5 à 0,2 mm que n(d1), où n est le nombre de fibres optiques et d1 est leur diamètre extérieur.

7. Procédé selon l'une des revendications 5 ou 6,
caractérisé par le fait que l'on choisit la hauteur (he) du canal d'entrée (ET), en son point le plus étroit, plus grande de 0,5 mm à 0,2 mm que le diamètre extérieur d1 des fibres optiques (LW1 à LW4).

8. Procédé selon l'une des revendications 3 à 7,
caractérisé par le fait que la partie (ET1) en forme d'entonnoir a une longueur de 5 mm environ.

9. Procédé selon l'une des revendications 4 à 8,
caractérisé par le fait que la partie tubulaire (ET2) a une longueur comprise entre 0,5 et 6 mm.

10. Procédé selon l'une des revendications précédentes,
caractérisé par le fait que l'on envoie le matériau de revêtement (BM) sous une légère pression d'alimentation et que l'on choisit la pression d'alimentation pour l'envoi du matériau de revêtement (BM) de sorte que, dans la zone de sortie du dispositif de revêtement (BE), le courant d'entraînement soit prépondérant sur le courant de pression produit par la pression d'alimentation.

11. Procédé selon l'une des revendications 2 à 10,
caractérisé par le fait que l'on envoie au canal d'entrée (ET) une petite partie du matériau de revêtement (BM) dans le sens opposé au sens de passage des fibres optiques (LW1 à LW4).

12. Procédé selon l'une des revendications précédentes,
caractérisé par le fait que l'on fait passer les fibres optiques dans une chambre intérieure (IK) à laquelle est envoyé le matériau de revêtement (BM), les fibres optiques n'étant en contact dans cette chambre qu'avec le matériau de revêtement.

13. Procédé selon la revendication 12,
caractérisé par le fait que l'on envoie le matériau de revêtement (BM) d'abord à deux chambres extérieures (AK1, AK2) à partir desquelles la chambre intérieure (IK) est alimentée en matériau de revêtement (BM).

14. Procédé selon l'une des revendications précédentes,

caractérisé par le fait que l'on fait passer les fibres optiques (LW1 à LW4), après le passage dans le matériau de revêtement (BM), au moins à un canal de sortie (AT1/AT2) se rétrécissant dans le sens de passage.

15. Procédé selon la revendication 14,
caractérisé par le fait que l'on fait passer les fibres optiques (LW1 à LW4), au niveau du canal de sortie (AT1), d'abord dans une partie (AT11/AT21) sensiblement en forme d'entonnoir.

16. Procédé selon la revendication 15,
caractérisé par le fait que l'on fait passer les fibres optiques, après la traversée de la partie (AT11/AT21) sensiblement en forme d'entonnoir, dans une partie tubulaire (AT12/AT22).

17. Procédé selon l'une des revendications 14 à 16,
caractérisé par le fait que l'on choisit l'angle ($\varphi$a1h/$\varphi$a2h) du canal de sortie (AT1/AT2) en hauteur, c'est-à-dire perpendiculairement à l'axe des largeurs du guide à ruban (LWB), entre 5° et 20°, de préférence autour de 8°.

18. Procédé selon l'une des revendications 14 ou 17,
caractérisé par le fait que l'on choisit l'angle ($\varphi$a1b/$\varphi$a2b) dans la zone de rétrécissement en largeur entre 5° et 20°, de préférence autour de 8°.

19. Procédé selon l'une des revendications précédentes,
caractérisé par le fait que l'on choisit la plus petite largeur (ba1/ba2) du canal de sortie (AT1/AT2) plus grande de 0,05 à 0,2 mm que n(d1).

20. Procédé selon l'une des revendications précédentes,
caractérisé par le fait que l'on choisit la hauteur du canal de sortie (AT1/AT2), dans sa section la plus petite, plus grande que le diamètre extérieur (d1) des fibres optiques (LW1 à LW4).

21. Procédé selon la revendication 20,
caractérisé par le fait que l'on choisit la hauteur (ha1/ha2) plus grande de 0,05 à 0,2 mm que le diamètre extérieur (d1) des fibres optiques (LW1 à LW4).

22. Procédé selon l'une des revendications précédentes,
caractérisé par le fait que l'on fait passer les fibres optiques (LW1 à LW4) successivement dans deux canaux de sortie (AT1/AT2) et que l'on produit dans chacun de ces canaux de sortie (AT1/AT2) un courant d'entraînement qui provoque un centrage des fibres optiques (LW1 à LW4).

23. Procédé selon la revendication 22,
caractérisé par le fait que l'on fait passer de nouveau les fibres optiques (LW1 à LW4), entre les deux canaux de sortie (AT1/AT2), dans du matériau de revêtement (BM) affluant.

24. Procédé selon l'une des revendications précédentes,
caractérisé par le fait qu'un canal de sortie servant à produire le courant entraîné se rétrécit plus perpendiculairement à l'axe des largeurs (y) du guide à ruban que dans l'axe des largeurs du guide à ruban.

25. Procédé selon l'une des revendications précédentes,
caractérisé par le fait que l'on fait passer le matériau de revêtement (BM) le long des fibres optiques (LW1n) dans le sens opposé au sens de passage des fibres optiques et que l'on évacue ce matériau de revêtement vers l'extérieur.

26. Procédé selon la revendication 25,
caractérisé par le fait que l'on applique une dépression au réservoir (VB3).

27. Procédé selon l'une des revendications 25 et 26,
caractérisé par le fait que l'on prélève le matériau de revêtement (BM) d'un réservoir (VB1) auquel on applique une surpression (PT1).

28. Procédé selon l'une des revendications 25 à 27,
caractérisé par le fait que l'on fait passer les fibres optiques (LW1n), avant leur revêtement, dans un étage de dépression (VC) dans lequel on applique une dépression sur les fibres optiques.

29. Dispositif de fabrication d'un guide d'ondes lumineuses à ruban (LWB), dans lequel plusieurs fibres optiques prérevêtues (LW1 à LW4) passent les unes à côté des autres dans un dispositif de revêtement (BE) les entourant, dans au moins un canal de sortie (AT1/AT2), dispositif de revêtement auquel est envoyé un matériau de revêtement (BM) servant à enrober les fibres optiques (LW1 à LW4),

caractérisé par le fait que le canal de sortie (AT1/AT2) est choisi dans sa plus petite section plus large que $n(d1)$, où n est le nombre des fibres optiques (LW1 à LW4) et d1 leur diamètre extérieur, le dispositif de revêtement étant construit de sorte que les fibres optiques (LW1 à LW4) passent dans le dispositif de revêtement (BE) sans contact avec des parties des parois ou avec des dispositifs de guidage et qu'elles passent donc librement, qu'elles ne viennent en contact sensiblement qu'avec le matériau de revêtement (BM) envoyé, et que la viscosité du matériau de revêtement et la vitesse de passage sont choisies de sorte que le mouvement dans le sens de la longueur des fibres optiques (LW1 à LW4) produit dans le canal de sortie un courant entraîné du matériau liquide de revêtement (BM), lequel courant centre les fibres optiques (LW1 à LW4) dans la gaine, formée par le matériau de revêtement (BM), après le passage du canal de sortie (AT1/AT2).

30. Dispositif selon la revendication 29,
caractérisé par le fait que le canal de sortie se rétrécit dans le sens de passage des fibres optiques.

31. Dispositif selon la revendication 30,
caractérisé par le fait que le rétrécissement du canal de sortie perpendiculairement à l'axe des largeurs du guide à ruban est choisi plus grand que le rétrécissement des parois du canal de sortie dans l'axe des largeurs du guide à ruban.

32. Dispositif selon la revendication 31,
caractérisé par le fait que l'angle du canal de sortie perpendiculairement à l'axe des largeurs du guide à ruban est choisi de 2 à 4 fois plus grand que l'angle du canal de sortie dans l'axe des largeurs du guide à ruban.

33. Dispositif selon l'une des revendications 31 et 32,
caractérisé par le fait que, dans le cas de l'utilisation d'un canal d'entrée, celui-ci se rétrécit plus perpendiculairement à l'axe des largeurs du guide à ruban que dans l'axe des largeurs du guide à ruban.

34. Dispositif selon l'une des revendications 29 à 33,
caractérisé par le fait qu'il est prévu, avant le dispositif de revêtement (BE) proprement dit, un étage de débordement (UK), qui est relié par l'intermédiaire d'au moins un canal de liaison (VK) à la zone du dispositif de revêtement (BE) qui contient le matériau de revêtement (BM).

35. Dispositif selon l'une des revendications 29 à 34,
caractérisé par le fait qu'il est prévu avant le dispositif de revêtement (BE), notamment avant l'étage de débordement (US), un étage de dépression (VC) dans lequel une dépression est appliquée sur les fibres optiques (LW1n).

FIG 1

FIG 2

FIG 3

FIG 5

FIG 4

FIG 6

24

FIG 7

FIG 8

FIG 9

## FIG 10

VS1
LW1
VS2
LW2
VS3
LW3
VS4
LW4
FR1
FR2
AR1
SEH
BM
HHE
VB
BE
UV
LWB
v0
AR2
SEA
v
RA
AT

## FIG 11

BE2
y
BM
EB
vm
CU3
φa2h*
CU1
CU2
x
ha1*
v0
(a)
v0
AT21
AT2
AT22
AT22*
v0
ha2*
LW1
AT21*
BE1

FIG 12

FIG 13

EP 0 582 944 B1

FIG 14